(19) Europäisches Patentamt
European Patent Office
Office européen des brevets

(11) **EP 3 796 115 B1**

(12) **EUROPEAN PATENT SPECIFICATION**

(45) Date of publication and mention
of the grant of the patent:
**09.11.2022 Bulletin 2022/45**

(21) Application number: **20196218.0**

(22) Date of filing: **15.09.2020**

(51) International Patent Classification (IPC):
**G05B 19/4065** (2006.01)

(52) Cooperative Patent Classification (CPC):
**G05B 19/4065;** G05B 2219/37435;
G05B 2219/39195

(54) **ANOMALY DETECTION FOR ROBOTIC ARMS USING VIBRATION DATA**

ANOMALIEDETEKTION FÜR ROBOTERARME UNTER VERWENDUNG VON VIBRATIONSDATEN

DÉTECTION D'ANOMALIES POUR BRAS ROBOTIQUES À L'AIDE DE DONNÉES DE VIBRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2019 US 201916576429**

(43) Date of publication of application:
**24.03.2021 Bulletin 2021/12**

(73) Proprietor: **Hitachi, Ltd.**
**Tokyo 100-8280 (JP)**

(72) Inventors:
• **HUANG, Wei**
  **Santa Clara, California 95054 (US)**
• **SUZUKI, Hideaki**
  **Santa Clara, California 95054 (US)**
• **FARAHAT, Ahmed Khairy**
  **Santa Clara, California 95054 (US)**
• **GUPTA, Chetan**
  **Santa Clara, California 95054 (US)**

(74) Representative: **MERH-IP Matias Erny Reichl
Hoffmann
Patentanwälte PartG mbB
Paul-Heyse-Strasse 29
80336 München (DE)**

(56) References cited:
EP-A1- 3 482 884          WO-A1-2019/067128
KR-A- 20170 121 869       US-A- 5 251 151
US-A1- 2012 041 575

**Description**

**BACKGROUND**

**Field**

The present disclosure relates to robotic apparatuses, and more specifically, to conducting anomaly detection for robotic arms and other robotic apparatuses uses vibration data.

**Related Art**

Industrial robotic arms in manufacturing are preprogramed manipulators configured to accomplish operations by following the designed movement. In smart industries, there are vibration sensors mounted on the robotic arms to monitor their movement during operations. Any mechanical system naturally vibrates and generates vibration signals which can be measured by the mounted vibration sensors. The measured vibration signals are the combination of natural vibrations superposed on the moving trajectories. Robotic arms are typically operating multiple types of jobs/actions (e.g. different tasks, different target) and not all of the vibration measurements capture the failure pattern. This is because different operations have different usage of mechanical components and the vibrations associated with the operations more dependent on the failed components contain more failure information.

The deviation of the real movement from the designed trajectory is one failure pattern that can be captured for anomaly detection. However, there can also be hidden anomalies before the appearance and detection of such deviations. Developing a method for failure prediction based on anomaly detection without considering the variability of the operations may result in a high false alarm rate.

WO 2019/067128 A1 discloses a system, to monitor health of a robot in a semiconductor wafer manufacturing facility, including a sensor coupled to the robot. The sensor is to obtain a vibration signal representative of vibration of the robot. The system also includes to extract and monitor a feature from the vibration signal, compare the feature to a threshold, and, in response to determining the feature satisfies the threshold, transmit an alert.

US 2012/041575 A1 discloses a compact set of learning data about normal cases that is created using the similarities among data as key factors. New data is added to the learning data according to the similarities and occurrence/nonoccurrence of an anomaly, the alarm occurrence section of a facility is deleted from the learning data, and an anomaly candidate is detected on the basis of the distance between each piece of the observation data and a subspace.

US 5 251 151 A describes a method and apparatus for diagnosing the mechanical condition of a machine.

**SUMMARY**

The invention comprises a method, which includes training a job categorizer (410) using learning data to sort vibrations of a robotic apparatus (100) into different groups which are associated with different preset activities; receiving vibration sensor data from sensors associated with a robotic apparatus configured to perform an activity from a plurality of preset activities; clustering the vibration sensor data to determine the activity the robotic apparatus is performing; executing a first anomaly calculation process on the vibration sensor data, the first anomaly calculation process configured to calculate anomalies from the vibration sensor data for the activity that the robotic apparatus is performing, the output involving a first set of first anomaly scores corresponding to each sample set in the vibration sensor data for a preset time window; and providing the first set of first anomaly scores to a second anomaly calculation process configured to detect anomalies across a batch of results from the first anomaly calculation process and across the plurality of activities, the second anomaly calculation process outputting a detection of anomaly or normal condition of the robotic apparatus.

The invention further comprises a a non-transitory computer readable medium, storing instructions for executing a process, the instructions involving training a job categorizer (410) using learning data to sort vibrations of a robotic apparatus (100) into different groups which are associated with different preset activities; receiving vibration sensor data from sensors associated with a robotic apparatus configured to perform an activity from a plurality of preset activities; clustering the vibration sensor data to determine the activity the robotic apparatus is performing; executing a first anomaly calculation process on the vibration sensor data, the first anomaly calculation process configured to calculate anomalies from the vibration sensor data for the activity that the robotic apparatus is performing, the output involving a first set of first anomaly scores corresponding to each sample set in the vibration sensor data for a preset time window; and providing the first set of first anomaly scores to a second anomaly calculation process configured to detect anomalies across a batch of results from the first anomaly calculation process and across the plurality of activities, the second anomaly calculation process outputting a detection of anomaly or normal condition of the robotic apparatus.

The invention further comprises a system which involves means for training of a job categorizer (410) using learning data to sort vibrations of a robotic apparatus (100) into different groups which are associated with different preset activities; receiving vibration sensor data from sensors associated with a robotic apparatus configured to perform an activity from a plurality of preset activities; means for clustering the vibration sensor data to determine the activity the robotic apparatus is performing; means for executing a first anomaly calculation process on the vibration sensor data, the first anomaly calculation process configured to calculate anomalies from the vibration sensor data for the activity that the robotic apparatus is performing, the output involving a first set of first anomaly scores corresponding to each sample set in the vibration sensor data for a preset time window; and means for providing the first set of first anomaly scores to a second anomaly calculation process configured to detect anomalies across a batch of results from the first anomaly calculation process and across the plurality of activities, the second anomaly calculation process outputting a detection of anomaly or normal condition of the robotic apparatus.

## BRIEF DESCRIPTION OF DRAWINGS

FIG. 1 illustrates an anomaly detection approach, in accordance with an example implementation.

FIG. 2 illustrates fluctuation-based anomaly detection, in accordance with an example implementation.

FIG. 3 illustrates the learning phase in the fluctuation-based anomaly detection, in accordance with an example implementation.

FIG. 4(a) illustrates a job categorizer in the fluctuation-based anomaly detection, in accordance with an example implementation.

FIG. 4(b) illustrates an example flow diagram of the job categorizer in the fluctuation-based anomaly detection, in accordance with an example implementation.

FIG. 5(a) illustrates an anomaly score calculator, in accordance with an example implementation.

FIG. 5(b) illustrates a flow diagram for the anomaly score calculator, in accordance with an example implementation.

FIG. 6(a) illustrates a batch anomaly score calculator, in accordance with an example implementation.

FIG. 6(b) illustrates an example flow diagram for the batch anomaly score calculator, in accordance with an example implementation.

FIG. 7 illustrates an example of the application phase, in accordance with an example implementation.

FIG. 8 illustrates a job categorizer of the application phase, in accordance with an example implementation.

FIG. 9 illustrates an example of anomaly score calculator in the application phase, in accordance with an example implementation.

FIG. 10 illustrates an example of the batch anomaly score calculator in the application phase, in accordance with an example implementation.

FIG. 11 illustrates the system for the frequency spectrum-based anomaly detection, in accordance with an example implementation.

FIG. 12 illustrates a learning model in accordance with an example implementation.

FIG. 13 illustrates details for the spectrum analysis, in accordance with an example implementation.

FIG. 14(a) illustrates an example of incremental clustering for the learning model, in accordance with an example implementation.

FIG. 14(b) illustrates an example flow for the learning model, in accordance with an example implementation.

FIG. 15 illustrates an application phase, in accordance with an example implementation.

FIG. 16(a) illustrates an anomaly score calculator in the application phase, in accordance with an example implementation.

FIG. 16(b) illustrates an example flow diagram for the anomaly score calculator, in accordance with an example implementation.

FIGS. 17(a) and 17(b) illustrate example plots for illustrating example implementations described herein.

FIG. 18 illustrates an example of a visualization interface that can be provided, in accordance with an example implementation.

FIG. 19(a) illustrates an example physical structure of the system, in accordance with an example implementation.

FIGS. 19(b) to 19(d) illustrate example alert generator systems for the physical structure of the system, in accordance with an example implementation.

FIG. 20 illustrates an example computing environment with an example computer device suitable for use in some example implementations.

## DETAILED DESCRIPTION

The following detailed description provides further details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

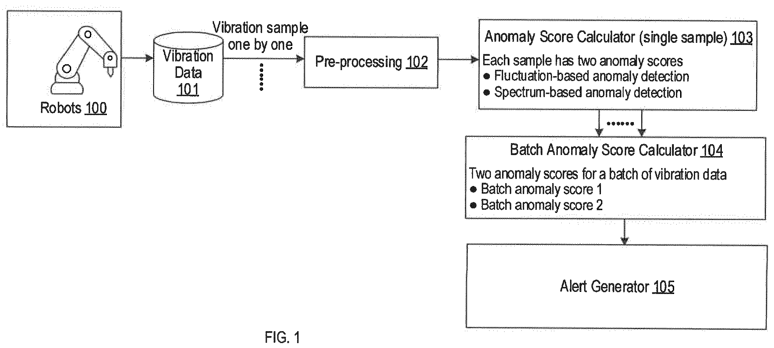

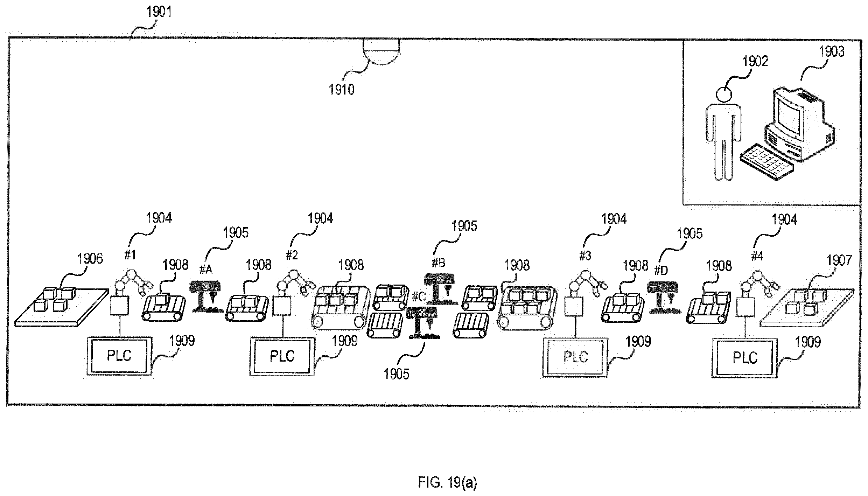

FIG. 1 illustrates an anomaly detection approach, in accordance with an example implementation. As illustrated in FIG. 1, the anomaly detection approach involves a system of robots 100 that provide vibration data 101, samples of which are processed through preprocessing 102 whereupon an single sample anomaly calculator 103 and a batch anomaly score calculator 104 are utilized. Depending on the desired implementation, as will be illustrated in the factory system of FIG. 19(a) to 19(d), the example anomaly detection system can be integrated into an alert and control system through an alert generator 105.

In example implementations described herein, there is an anomaly detection approach for robotic arm systems based on vibration measurements. The anomaly detection approach incorporates two methods to capture different anomalies in vibration, namely a fluctuation-based anomaly detection, and a spectrum-based anomaly detection.

In the fluctuation-based anomaly detection, short time pulse noises (strong peaks) in the vibration are captured. Such short time pulses have a relatively broader frequency band, which can be difficult to notice in the frequency spectrum in a spectrum analysis pre-defined window.

The spectrum-based anomaly detection uses frequency spectrums in a pre-defined window using spectrum analysis and monitoring the deviation from normal frequency spectrums. The frequency spectrums involve moderately longer time (pre-defined window) patterns.

The vibration data 101 involves vibration signals measured from mounted vibration sensors on the robots 100. The vibration sensor can be multi-dimensional to measure the movement in multiple dimensions. The vibration measurements are segmented into files where each file corresponding to one operation. The vibration measurements are the combination of natural fluctuations from the robotic arm mechanical system superposed on the moving trajectories.

$$\text{Vibration signal} = \text{Movement trajectory} + \text{Superposed natural fluctuations}$$

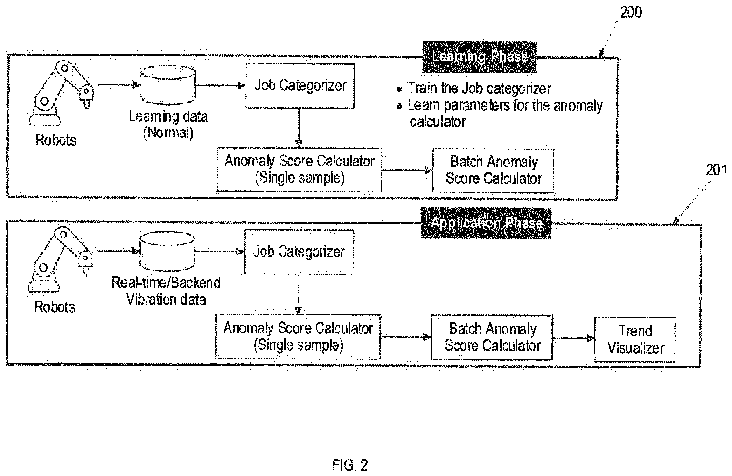

FIG. 2 illustrates fluctuation-based anomaly detection, in accordance with an example implementation. In example implementations described herein, there is a learning phase 200 to train the job categorizer, anomaly score calculator, and batch anomaly score calculator according to fluctuation-based anomaly detection. In the application phase 201, the job categorizer, anomaly score calculator, and batch anomaly score calculator are then deployed to receive real time or backend vibration data.

In fluctuation-based anomaly detection, example implementations involve an anomaly detection method for the robotic arms based on their fluctuations in the vibration measurements. The anomaly indicator is defined to characterize the noisy level of the fluctuations by using a thresholding mechanism. For different types of operations, the normal ranges of the fluctuation are learned respectively using normal vibration measurements. A thresholding mechanism is then applied to count the number of peaks in a vibration measurement (associated to one operation) that beyond the pre-learned normal range. The anomaly indicator is the peak density which is the number of peaks normalized by the time duration of the vibration measurement. There are two phases involved in the fluctuation-based anomaly detection: the learning phase and the application phase.

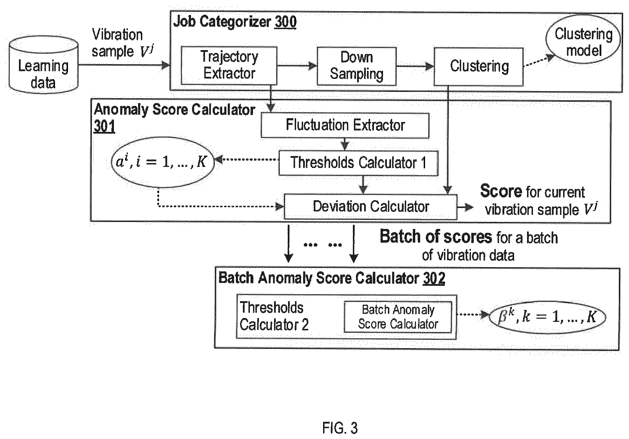

FIG. 3 illustrates the learning phase in the fluctuation-based anomaly detection, in accordance with an example implementation. In the learning phase 200, the job categorizer 300 is trained to identify different robot operation types. Parameters in the Anomaly Score Calculator (single sample) 301 and the Batch Anomaly Score Calculator 302 are learned for each job type respectively. The Anomaly Score Calculator 301 and the Batch Anomaly Score Calculator 302 are based on the thresholding mechanism.

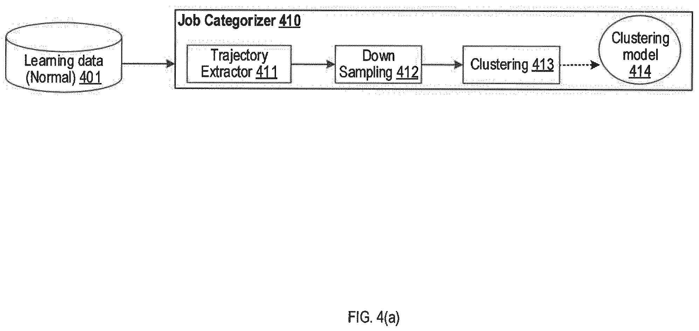

FIG. 4(a) illustrates a job categorizer in the fluctuation-based anomaly detection, in accordance with the invention. Given learning data 401, the job categorizer 410 is trained to sort the vibrations into different groups which are possibly associated with different jobs or operations. Different operations have different designed movement trajectories. The job categorizer 410 first applies a moving average smoothing to the vibration data to extract the general movement trajectories, which are then used for categorizing.

Trajectory extractor 411: A sliding averaging window is used to smooth over the fluctuation in the original vibration and extract the general movement trajectory as movement signature. The extracted movement signature for each multi-dimensional original vibration signal has the same dimension and length.

Downsampling 412: In this step, each extracted multi-dimensional smooth movement trajectory is first downsampled to a fixed length n (e.g. n = 50) in each dimension, and then concatenated to form a 1-dimension vector with element number equals to n times the dimension.

Clustering 413: In this step, the 1-dimension vectors from vectorization stage are the input to any unsupervised clustering algorithm (k-means is the preferred embodiment) to perform a grouping task which is used in clustering model 414.

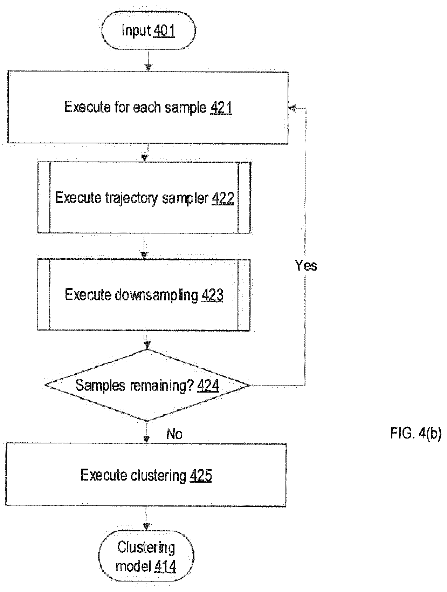

FIG. 4(b) illustrates an example flow diagram of the job categorizer in the fluctuation-based anomaly detection, in accordance with an example implementation. The vibration data 401 is used as input. In particular, the input involves vibration data for learning $V = [V^1, \ldots, V^i, \ldots, V^N]$, where $N$ is the total number of samples, Pre-defined smoothing window size: w, and pre-defined length for vibration down-sampling: $L$.

At 421, a process for the trajectory extractor 411 and downsampling 412 is executed iteratively for each vibration sample $V^i = \left[v_1^i, \ldots, v_j^i, \ldots, v_{n_i}^i\right]$ in $V$, where $n_i$ is the number of measurements in $V^i$.

At 422, the trajectory extractor 411 is executed by using a moving average to extract the smoothed vibration $V_{smooth}^i$ with smoothing window size: w

$$V_{smooth}^i = Moving\ Average\ \left(V^i\right) = \left[v_{smooth_1}^i, \ldots, v_{smooth_j}^i, \ldots, v_{smooth_{n_i}}^i\right], \quad \text{where}$$

$$v_{smooth_j}^i = \frac{1}{w}\sum_{r=j-\frac{w}{2}}^{j+\frac{w}{2}} v_r^i$$

At 423, the downsampling 412 is executed, involving shortening the $V_{smooth}^i$ to create $V_{traj}^i$ of length: $L$ by using down-sampling:

$$V_{traj}^i = Downsampling\left(V_{smooth}^i, L\right)$$

At 424, a determination is made as to whether each of the vibration samples is processed. If there are samples remaining (Yes) then the flow reiterates at 421 to proceed to the next sample, otherwise (No), the flow proceeds to 425 to execute the clustering 413 to generate the cluster model.

At 425, the clustering 413 is conducted to generate the cluster model based on the smoothing and downsampling conducted for all of the samples through the process of 421-424. In clustering 413,

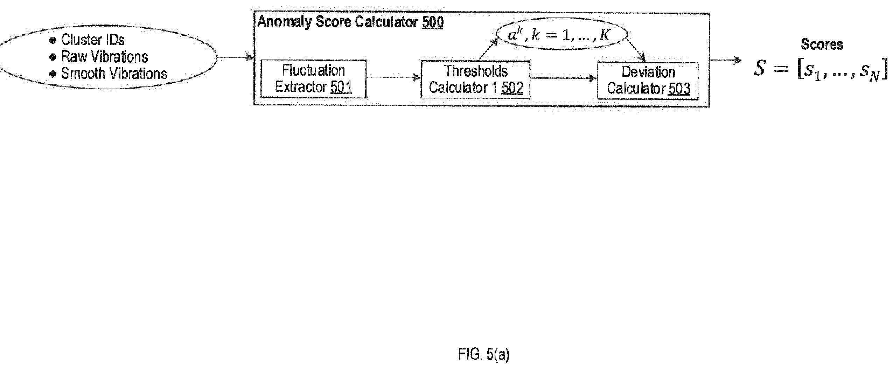

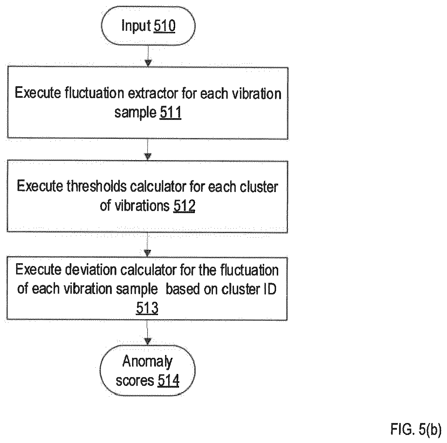

FIG. 5(a) illustrates an anomaly score calculator, in accordance with an example implementation. Anomaly score calculator 500 takes in input such as cluster identifiers (IDs), raw vibrations and smooth vibrations, and provides corresponding anomaly scores. Anomaly score calculator 500 processes such input through a fluctuation extractor 501, a thresholds calculator 502, and a deviation calculator 503. Further details of the flow of anomaly score calculator 500 are provided with respect to FIG. 5(b).

FIG. 5(b) illustrates a flow diagram for the anomaly score calculator, in accordance with an example implementation. At 510, the input of the vibration data set for learning: $V = [V^1, ..., V^i, ..., V^N]$, the smoothed vibrations

$$V_{smooth} = \left[ V_{smooth}^1, ..., V_{smooth}^i, ..., V_{smooth}^N \right]$$

, and the Cluster IDs: C = $[c^1,..., c^i,...,c^N], c^i \in [1,2, ..., k,...,K]$ are provided to the anomaly score calculator 500.

At 511, the anomaly score calculator 500 executes the fluctuation extractor 501. For each vibration sample

$$V^i = \left[ v_1^i, ..., v_j^i, ..., v_{n_i}^i \right] \text{ in } V$$

, where $n_i$ is the number of measurements in $V^i$, the fluctuation extractor 501 obtains the fluctuation component $V_{fluct}^i$ by subtracting $V_{smooth}^i$ from $V^i$, such that

$$V_{fluct}^i = absolute\left( V^i - V_{smooth}^i \right) = \left[ absolute\left( v_1^i - \right. \right.$$

$$\left. v_{smooth_1}^i \right), ..., absolute\left( v_{n_i}^i - v_{smooth_{n_i}}^i \right) \right] = \left[ v_{fluct_1}^i, ..., v_{vluct_{n_i}^i} \right]$$

At 512, the anomaly score calculator 500 executes the thresholds calculator 502 for each cluster of vibrations.

For each cluster of vibrations $V^{c^k} = \left[ V_1^{c^k}, ..., V_m^{c^k}, ..., V_{M_k}^{c^k} \right]$, $c^k \in [1,2, ..., K]$, where $\sum_{k=1}^K M_k = N$, thresholds calculator 1 502 calculates, for each cluster, the range of the fluctuation by using the mean and standard deviation of the fluctuation in each vibration belong to the cluster, such that:

$$a^k = \frac{1}{M_k} \sum_{m=1}^{M_k} Mean\left( V_{fluct_m}^{c^k} \right) + \theta \times$$

$$\frac{1}{M_k} \sum_{m=1}^{M_k} Standard\ Deviation\left( V_{fluct_m}^{c^k} \right), where\ \theta = 5$$

At 513, the anomaly calculator 500 executes the deviation calculator 503 for the fluctuation of each vibration sample based on cluster ID. That is, for each vibration sample $V^i$, use the fluctuation: $V_{fluct}^i = \left[ v_{fluct_1}^i, ..., v_{fluct_{n_i}}^i \right]$

, where $n_i$ is the number of elements in $V^i$. Given its cluster id: $c^i$, get its threshold value $a^k$ where $c^i = k$, whereupon the

deviation calculator 503 calculates anomaly scores, such that anomaly score $s^i$ = the percentage of elements in $V_{fluct}^i$ with value above the threshold $a^k$

$$S_i = percentage\left( V_{fluct}^t > a^k \right)$$

At 514, the corresponding set of anomaly scores S are provided as output.

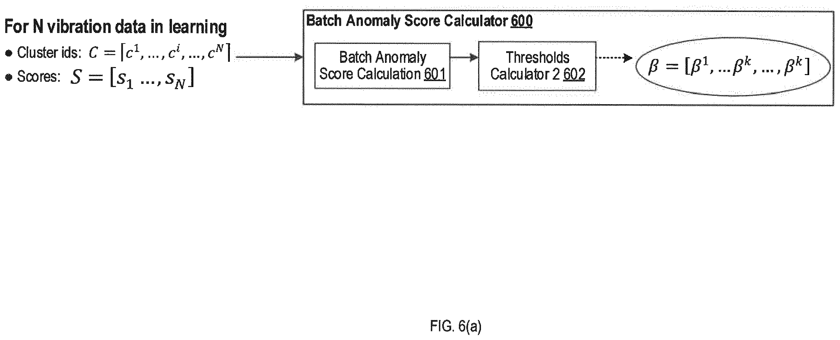

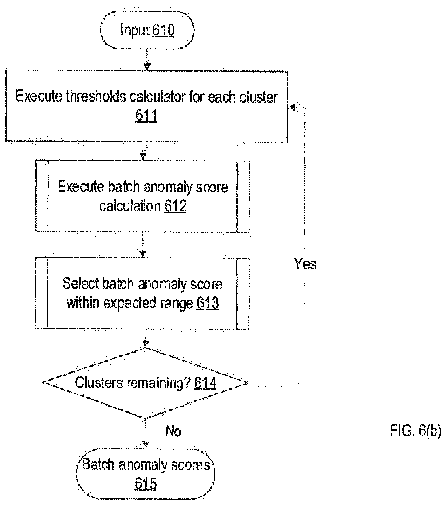

FIG. 6(a) illustrates a batch anomaly score calculator, in accordance with an example implementation. Batch anomaly score calculator 600 involves a batch anomaly score calculation 601 and a thresholds calculator 602. Input to batch anomaly score calculator 600 can involve vibration data set for learning, cluster IDs and anomaly scores, wherein the output is the batch anomaly score. The flow for batch anomaly score calculator 600 is provided in FIG. 6(b).

FIG. 6(b) illustrates an example flow diagram for the batch anomaly score calculator, in accordance with an example implementation. At first, the batch anomaly score calculator 600 takes in input 610 involving Cluster ids: $C = [c^1, ..., c^i, ..., c^N], c^i \in [1, ..., k, ..., K]$, and Anomaly scores: $S = [s_1 ..., s_N]$.

At 611, the batch anomaly score calculator 600 executes thresholds calculator 2 611 for each cluster, and considers all of the learning data as one batch. That is, for each cluster $k$, thresholds calculator 2 611 get the scores for the vibration samples in the cluster $k$:$S^k = \begin{bmatrix} s_1^k ..., s_{n_k}^k \end{bmatrix}$, where $\sum_{k=1}^{K} n_k = N$.

At 612, the batch anomaly score calculation 601 is executed. For $\beta^k$ in a range of values: $[minimum(S^k), ..., maximum(S^k)]$, the batch anomaly score calculation 601 calculates the batch anomaly score: $p^k = BatchAnomaly(S^k, \beta^k)$
wherein

$$P = BatchAnomaly(S, \beta) = Percentage(S \geq \beta)$$

At 613, the thresholds calculator 2 602 selects the batch anomaly score within an expected range. That is, for each cluster $k$, thresholds calculator 2 602 selects the $\beta^k$ value which produce *Batch Anomaly score*: $p^k$ closest to a predetermined small value(e.g., 10%) for the learning data (which are normal measurements) . Since learning data is collected in the normal condition, $p^k$ should be a small value, and therefore $\beta^k$ should be a large value. In example implementations, a higher $\beta^k$ indicates less sensitivity to failures related to strong fluctuation.

At 614, a determination is made as to whether there are clusters that remain to be processed. If so (Yes), then the flow proceeds to 611 to execute the thresholds calculator 2 602 for the next cluster, otherwise (No) the flow proceeds to 615 to output batch anomaly scores P. The whole range of Batch anomaly score can be normalized to [0,1], where 1 means highest anomaly. In an example implementation, for the learning data which is considered to be the normal condition, the batch anomaly score can be set close to a predetermined small value (e.g. 0.1 which is 10%).

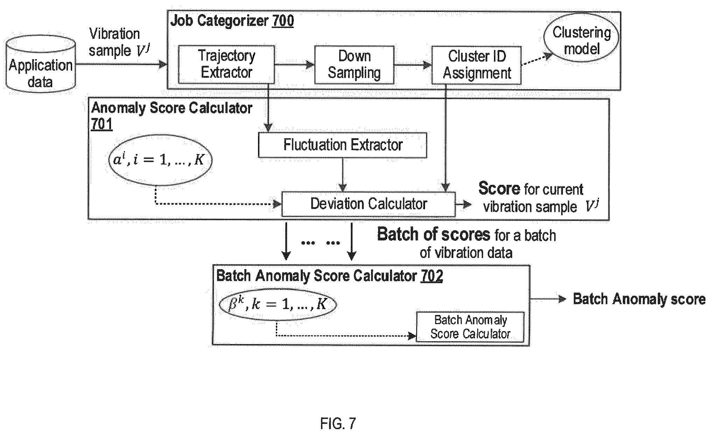

FIG. 7 illustrates an example of the application phase, in accordance with an example implementation. In application phase 201, the samples in application data will be passed to the trained model sequentially. Each sample will have one anomaly score after the job categorizer 700 and anomaly score calculator 701. After the anomaly scores are calculated for a batch of samples in a pre-defined batch window, the batch of anomaly scores will be passed to the batch anomaly score calculator 702 to calculate a batch anomaly score value.

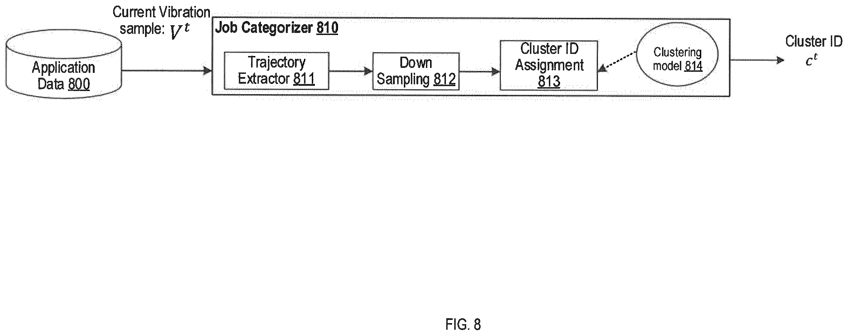

FIG. 8 illustrates a job categorizer of the application phase, in accordance with an example implementation. In the application phase, the vibration sample from the application data 800 will be transformed to the appropriate format through the trajectory extractor 811 and down-sampling 812. Then, the cluster ID assignment 813 will assign the cluster ID to current vibration sample based on the trained clustering model generated from the learning phase. The job categorizer 810 can thereby be configured to determine the appropriate job through execution of the flow as follows.

The input for job categorizer 810 from the application data 800 involves current vibration sample in application $V^t = [v_1^t, ..., v_i^t, ..., v_n^t]$, where $n$ is the number of elements in $V^t$, pre-defined smoothing window size: w, and pre-defined length for vibration down-sampling: *L*. Trajectory extractor 811 then uses the moving average to extract the smoothed vibration $V_{smooth}^t$ with smoothing window size: *w*, such that

$$V_{smooth}^t = Moving\ Average\ (V^t) = \left[ v_{smooth_1}^t, ..., v_{smooth_i}^t, ..., v_{smooth_n}^t \right]$$, where

$$v_{smooth_i}^t = \frac{1}{w} \sum_{r=i-\frac{w}{2}}^{i+\frac{w}{2}} v_r^t$$

Downsampling 812 then shortens the $V_{smooth}^t$ to create $V_{traj}^t$ with the length of *L* by using down-sampling as follows: $V_{traj}^c = Downsampling(V_{smooth}^c, L)$

Wherein the output: $V_{traj}^t = \left[ v_{traj_i}^t, ..., v_{traj_i}^t, ... v_{traj_L}^t \right]$, has *L* elements

Cluster ID assignment 813 then utilizes the clustering model 814 trained in the learning phase to assign the cluster id: $id^c$ for current vibration $V^c$ based on $V_{traj}^t = \left[ v_{traj_1}^t, ..., v_{traj_i}^t, ..., v_{traj_L}^t \right]$

The resulting output is cluster IDs $c^t = ClusteringModel(clusters = K), predict\left(V_{traj}^c\right)$, $c^t \in [1,...,K]$

As described herein, *ClusteringModel* can involve any type of unsupervised clustering model in accordance with the desired implementation, such as K-means.

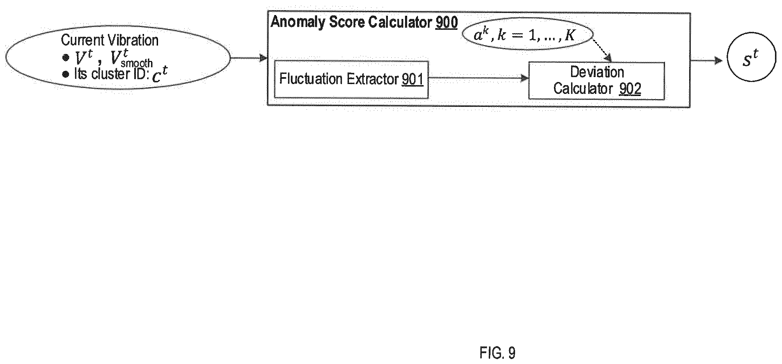

FIG. 9 illustrates an example of anomaly score calculator in the application phase, in accordance with an example implementation. The anomaly score calculator 900 will calculate an anomaly score for current vibration sample. As illustrated in FIG. 9, the types of input into anomaly score calculator 900 can include the current vibration sample:

$V^t = [v_1^t, ..., v_i^t, ..., v_n^t]$, the smoothed version: $V_{smooth}^t = \left[v_{smooth_1}^t, ..., v_{smooth_i}^t, ..., v_{smooth_n}^t\right]$, and the cluster id: $c^t$, where $c^t \in [1, ..., K]$.

Fluctuation extractor 901 takes the input and obtains the fluctuation component $V_{fluct}^1$ by subtracting $V_{smooth}^t$ from $V^t$ such that:

$$V_{fluct}^t = absolute(V^t - V_{smooth}^t) = \left[abslute\left(v_1^t - v_{smooth_1}^t\right), ..., absolute\left(v_n^t - v_{smooth_n}^t\right)\right] = \left[v_{fluct_1}^t, ..., v_{fluct_i}^t, ..., v_{fluct_n}^t\right]$$

Deviation calculator 902 can obtain the threshold value $a^{c^t}$, $c^t \in [1, ..., k]$, based on the cluster id: $c^t$ and the thresholds $a^k, k = 1, ..., K$, learned in the learning phase, and then calculate the anomaly score = the percentage of elements in $V_{fluct}^t$ with the value above the threshold $a^{c^t}$. The output of the anomaly score calculator 900 is

$$s^t = Percentage\left(V_{fluct}^t > a^{c^t}\right)$$

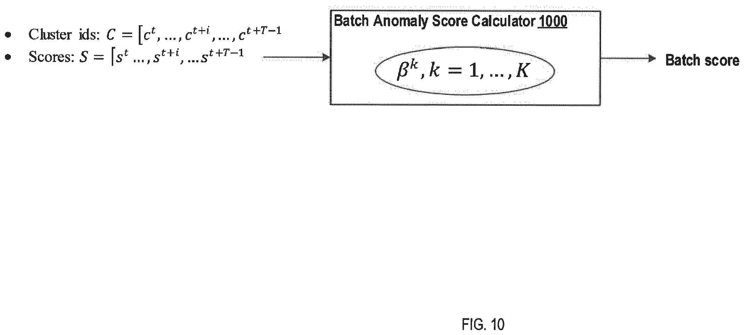

Then, the anomaly scores are calculated for a batch of vibration samples $V = [V^t, ..., V^{t+i}, ..., V^{t+T-1}]$, where $T$ is the batch size (e.g., number of samples in a time window) as illustrated in FIG. 10.

FIG. 10 illustrates an example of the batch anomaly score calculator in the application phase, in accordance with an example implementation. Batch anomaly score calculator 1000 takes in an input for the current batch of vibration signals that includes Cluster IDs: $id = [id^t, ... id^{t+1}, ...id^{t+T-1}]$, $id^{t+i} \in [1, ..., k, ..., K]$, and Anomaly scores: $S = [s^t ..., s^{t+i}, ..., s^{t+T}-1]$.

At first, batch anomaly score calculator 1000 splits the anomaly scores S into clusters:

$$S = [S^1, ..., S^k, ..., S^K], \text{ where } S^k = \left[s_1^k, ..., s_{n_k}^k\right], \text{ and } \sum_{k=1}^{K} n_k = T$$

Then, for each cluster of vibration samples in the batch, the batch anomaly score calculator 1000 calculates the batch anomaly score as follows:

$$p^k = BatchAnomaly(S, \beta)$$

$$BatchAnomaly(S, \beta) = Percentage(S \geq \beta)$$

Finally, batch anomaly score calculator 1000 sums the batch anomaly score for different clusters to produce one batch anomaly score P:

$$P = \frac{\sum_{k=1}^{K} n^k \times p^k}{T}$$

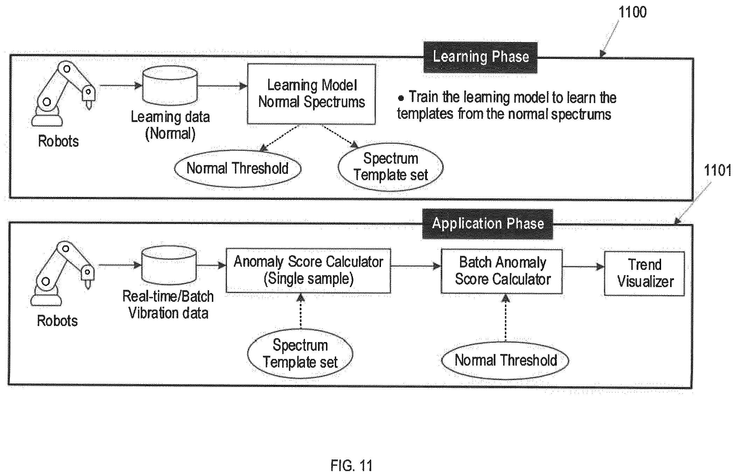

FIG. 11 illustrates the system for the frequency spectrum-based anomaly detection, in accordance with an example implementation. The system for the frequency spectrum-based anomaly detection involves a learning phase 1100 and an application phase 1101. The frequency spectrum-based anomaly detection is based on their natural fluctuations in the vibration measurements. The anomaly indicator is defined to characterize the noisy level of the natural fluctuations by comparing frequency spectrum. For different types of operations, the normal range of the fluctuation is learned respectively as combinations of normal vibration spectrum. The anomaly indicator is defined as the deviation from the most likelihood spectrum which has the minimum distance of all the normal spectrums.

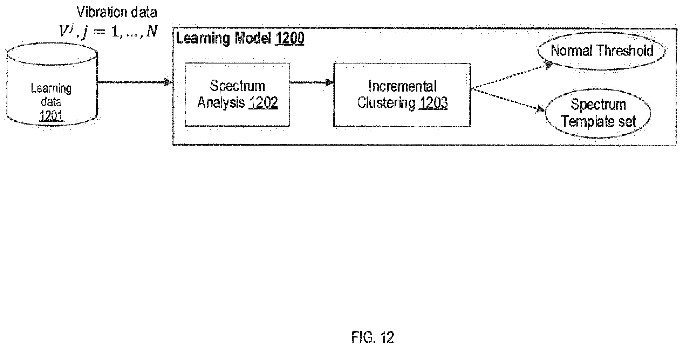

FIG. 12 illustrates a learning model in accordance with an example implementation. Learning model 1200 intakes learning data 1201 as input, which is processed through spectrum analysis 1202 and incremental clustering 1203 to provide a normal threshold and a spectrum template set. Spectrum analysis 1202 can be in the form of short time Fourier transform (STFT) or other types of spectrum analysis depending on the desired implementation.

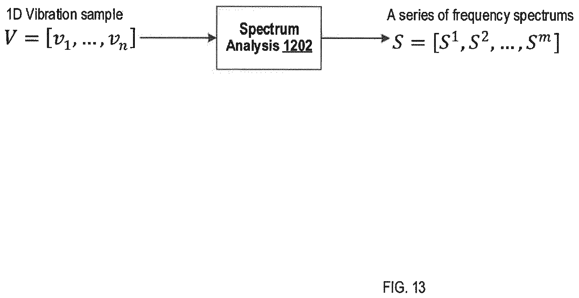

FIG. 13 illustrates details for the spectrum analysis, in accordance with an example implementation. To obtain the motion pattern, example implementations use a motion pattern extractor which calculates the frequency spectrum by using spectrum analysis 1202 for vibration data.

In the following example, STFT is utilized, however, any type of spectrum analysis can be utilized in accordance with the desired implementation. As illustrated in FIG. 13, the input can involve $V$: *vibration data,* $L_w$: *Window size,* and $L_s$: *Window shifting length* to produce a series of frequency spectrums $S = STFT(V, L_w, L_s)$.

At first, the spectrum analysis 1202 splits ID vibration data $V = [v_1, v_2, ..., v_n]$ into a series of windows: $U = [U^1,$

$$i = 1, ..., m, m = floor\left(\frac{n - L_w}{L_s}\right)$$

$U^2, ..., U^m]$ with overlap where $U^i = [v_{(i-1)\times L_s}, v_{(i-1)\times L_s+1}, ..., v_{(i-1)\times L_s+L_w-1}]$,

Then, the spectrum analysis 1202 calculates spectrum $S$ from $U$ by applying FFT (Fast Fourier Transform) to each window of signal $U_i$, $i = 1, ..., m$

$$S = [S^1, S^2, ..., S^m]$$

$$S^i = FFT(U^i) = \left[s_1^i, s_2^i, ..., s_{\frac{L_w}{2}}^i\right]$$

The series of frequency spectrums is therefore $, i = 1, ..., m$

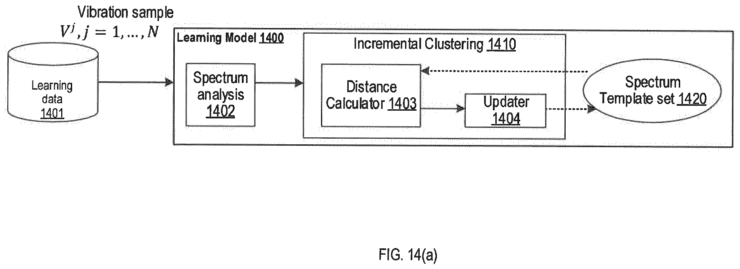

FIG. 14(a) illustrates an example of incremental clustering for the learning model, in accordance with an example implementation. In the example of FIG. 14(a), the learning model 1400 intakes learning data 1401 for processing into a spectrum analysis 1402 and incremental clustering 1410, which utilizes the spectrum template set 1420 in a distance calculator 1403 to provide updates to the spectrum template set 1420 through the updater 1404. An anomaly indicator is defined as a reconstruction deviation which depends on an unsupervised machine learning algorithm. For instance, in case of K-means as follows: An anomaly indicator of an obtained motion pattern $x_i$ is defined as a distance from the nearest motion pattern $m_j$. All of anomaly measurement in one file is defined as the summation of each distance.

$$Anomaly\ indicator = argmin_{m_1, m_2, ..., m_c} \sum_{i=1}^{n} min_j \left\|x_i - m_j\right\|$$

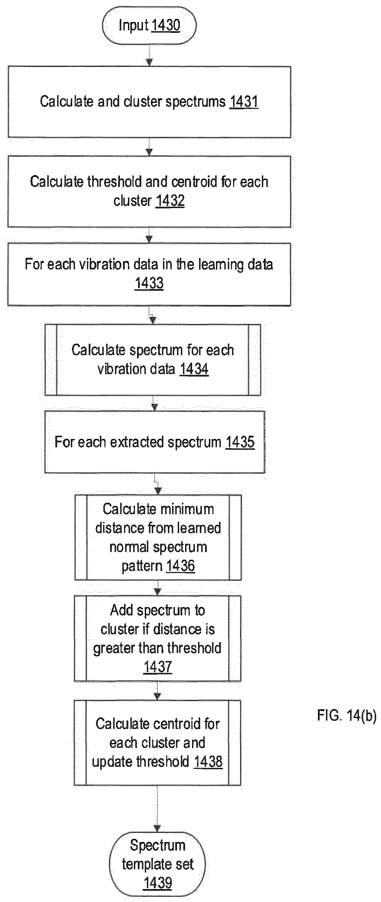

FIG. 14(b) illustrates an example flow for the learning model, in accordance with an example implementation. The series of obtained motion patterns are categorized into given size of groups by using unsupervised machine learning algorithm such as K-means. Input 1430 involves the learning data $[V^1, ..., V^N]$. In the following example, spectrum analysis 1402 utilizes STFT, however, other types of spectrum analysis can be utilized in accordance with the desired implementation.

At 1431, the spectrum analysis 1402 calculates the spectrums from the first vibration data $V^1$ using STFT:

$S^1 = STFT(V^1, L_w, L_s) = \left[S_1^1, ..., S_{n_1}^1\right]$ . Then, given a cluster size $c$, incremental clustering 1410 clusters the spectrums $\left[S_1^1, ..., S_{n_1}^1\right]$ into $c$ clusters: $T^1 = \left[t_1^1, ..., t_{m_1}^1\right], T^2 = \left[t_1^2, ..., t_{m_2}^2\right], ..., T^c = \left[t_1^c, ..., t_{m_c}^c\right]$ , where

$n_1 = m_1 + m_2 + \cdots + m_c$ by using a clustering algorithm such as K-means.

$$mean(T^j) = \frac{1}{m_j}\sum_{p=1}^{m_j} t_p^j$$

At 1432, for each cluster $j$, distance calculator 1403 calculates centroid $M_j =$

and threshold $D = max_j\left(max_p\left(\left\|t_p^j - M_j\right\|\right)\right)$ of spectrums belonging to each cluster, wherein $M = [M_1, M_2, ...,$

$M_c$] is the learned normal spectrum pattern.

At 1433-1438, each vibration data in the learning data is processed in a loop. That is, for $k = [2,3, ..., N]$ from the process of 1433, incremental clustering 1410 repeats the following for each remaining vibration data $V^k$ in the learning data.

At 1434, the incremental clustering 1410 calculates the spectrums $S^k$ for each vibration data $V^k$ such that

$$S^k = STFT(V^k, L_w, L_s) = \left[S_1^k, ..., S_{n_{k-}}^k\right] , k = 2, ..., N$$

At 1435-1438, each extracted spectrum is processed for the given vibration data in a loop. That is, for each spectrum of spectrums set $\left[S_1^k, S_2^k, ... S_{n_k}^k\right]$ extracted from one vibration data $V^k$, the process 1435 initiates a loop as follows.

At 1436, for each spectrum $S_1^k$, distance calculator 1403 calculates minimum distance $d_i^k$ from learned normal spectrum pattern $d_i^k = min\left(\left\|S_i^k - M_j\right\|\right), l = argmin_j\left(\left\|S_i^k - M_j\right\|\right), i = 1, ..., n_k, j = 1, ..., c$

At 1437, if $d_i^k > D$, incremental clustering 1410 add $S_i^k$ to $S_{old}^1$ as follows

$$S_{new}^1 = S_{old}^1 + \left[S_i^k\right], n_1^{new} = n_1^{old} + 1$$

and then, clusters the spectrum $S_{new}^1$ into clusters: $T_{new}^1, T_{new}^2, ..., T_{new}^c$

At 1438, for each cluster $j$, updater 1403 calculates centroid $M_j^{new}$ and update threshold $D^{new}$.

Once all vibration data and spectrums are processed, the result at 1439 is the spectrum template set 1420.

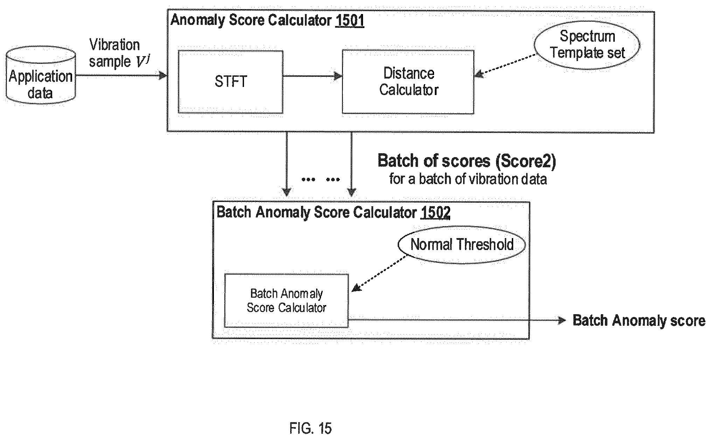

FIG. 15 illustrates an application phase 1101, in accordance with an example implementation. The application phase 1101 involves an anomaly calculator 1501 and a batch anomaly calculator 1502 which operates similarly to the systems illustrated in FIGS. 3 and 7. In the application phase, each sample will have one anomaly score. After the anomaly scores are calculated for a batch of samples in a pre-defined batch window, the batch of anomaly scores will be passed to the batch anomaly score calculator 1502 to calculate a batch anomaly score value.

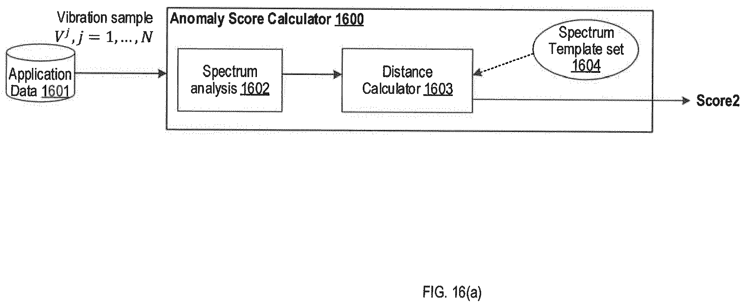

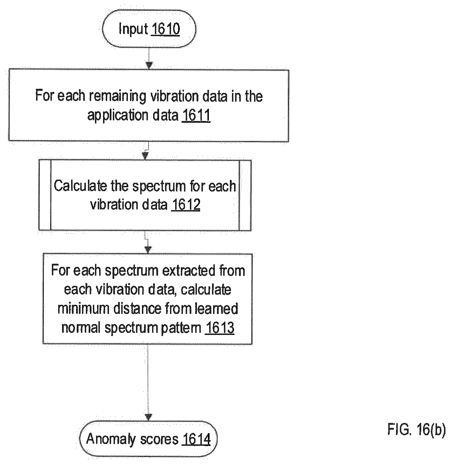

FIG. 16(a) illustrates an anomaly score calculator in the application phase, in accordance with an example implementation. Anomaly score calculator 1600 intakes application data 1601, and involves a spectrum analysis 1602, a distance calculator 1603, and a spectrum template set 1604. Further details for the flow of the anomaly score calculator 1600 are provided in FIG. 16(b).

FIG. 16(b) illustrates an example flow diagram for the anomaly score calculator, in accordance with an example implementation. At 1610, application data $[V^1, ..., V^N]$ is input and the anomaly score calculator 1600 processes the input based on the learned normal spectrum pattern 1604 M = $[M_1, M_2, ..., M_c]$. In the following example, spectrum analysis 1602 utilizes STFT, however, other types of spectrum analysis can be utilized in accordance with the desired implementation.

At 1611, a process loop is initiated for $k = [1,2, ..., N]$. That is, the anomaly score calculator 1600 repeats 1612-1613 for each remaining vibration data $V^k$ in the application data.

At 1612, the spectrum analysis 1602 calculates the spectrum $S^k$ for each vibration *data* $V^k$, such that

$$S^k = STFT(V^k, L_w, L_s) = \left[S_1^k, ..., S_{n_k}^k\right] , k = 2, ..., N$$

At 1613, for each spectrum of spectrums set $\left[S_1^k, S_2^k, ... S_{n_k}^k\right]$ extracted from one vibration data $V^k$, the distance calculator 1603 calculates the minimum distance $d_i^k$ from learned normal spectrum pattern

$$d_i^k = min\left(\left\|S_i^k - M_j\right\|\right), l = argmin_j\left(\left\|S_i^k - M_j\right\|\right) , i = 1, ..., n_k, j = 1, ..., c$$

At 1614, the anomaly score Score2 of $V^k$ is calculated, such that $Score2(V^k) = \frac{1}{n_k}\sum_1^{n_k} d_i^k$

An anomaly indicator distribution is a histogram or the density of all the mean anomaly indicator created from all the files in fixed period (for example, one day). A mean of anomaly indicator is the average of all the anomaly indicator corresponding to one file.

A distribution shift is defined as a density ratio of two different anomaly indicator distributions.

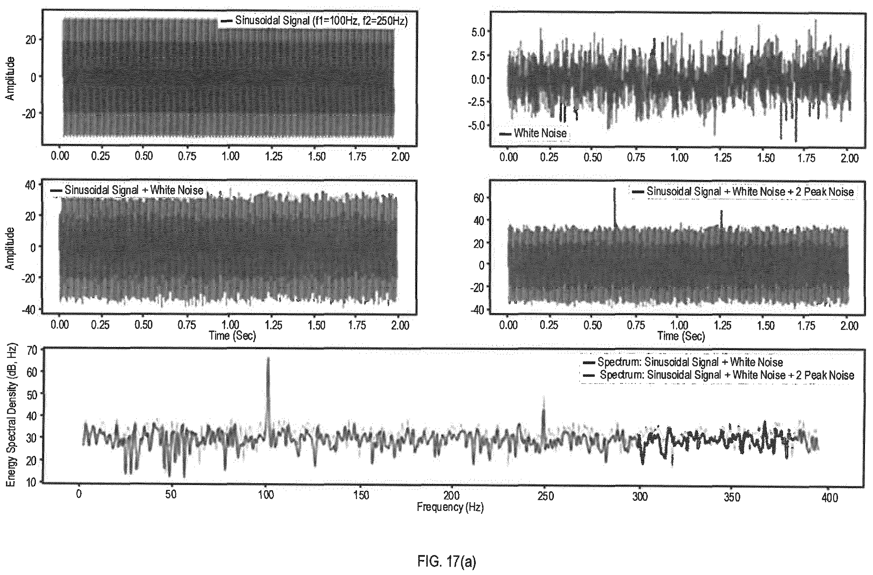

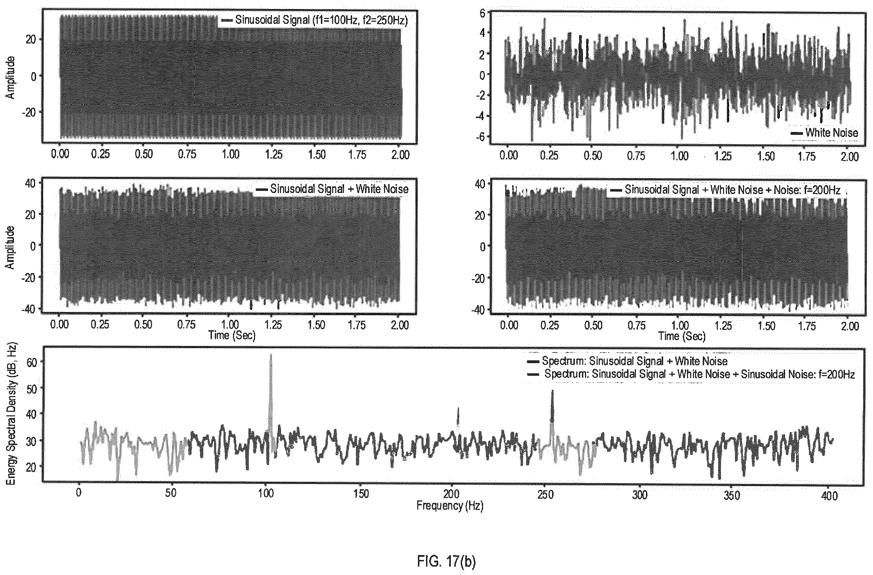

FIGS. 17(a) and 17(b) illustrate example plots for illustrating example implementations described herein. As described herein, the anomaly detection approach incorporates two methods to capture different anomalies in vibration: the fluctuation-based anomaly detection and the spectrum-based anomaly detection. The fluctuation-based anomaly detection aims to capture the short time pulse noises (strong peaks) in the vibration. These short time pulses have relatively broader frequency band, which is hard to be noticed in the frequency spectrum.

FIG. 17(a) illustrates an example simulation of a signal for the fluctuation-based anomaly detection. As shown in FIG. 17(a), the top left plot is the original signal which is a sinusoidal signal with two frequency components at 100 Hz and 250 Hz.

$$original\ signal\ =\ 20 \times \sin 2\pi f_1 t\ + 20 \times \sin 2\pi f_2 t\ , f_1 = 100\ Hz, f_2 = 250\ Hz$$

A white noise as shown in top right plot is added to the original signal to form a simulated signal as shown in the middle left plot.

$$simulated\ signal\ =\ original\ signal + white\ nosie$$

Then, two pulse noise are added to the simulated signal and form the signal as shown in middle right plot. The frequency spectrum for the simulated signal with and without the pulse noise are plotted in the bottom plot.

From the time domain signal shown in middle right plot, the transient pulse noise can be detected using a thresholding mechanism. However, it can be difficult to observe the deviation by monitoring their frequency spectrums as shown in the bottom plot.

As shown in FIG. 17(b), the top left, top right and middle left plots are the same as in FIG. 17(a), with a sinusoidal noise at 200 Hz is added to the simulated signal to form the signal as shown in middle right plot. The frequency spectrum for the simulated signal with and without the sinusoidal noise is plotted in the bottom plot.

In this case, the sinusoidal noise can be difficult to observer from the time domain signal shown in middle right plot. However, it can be observed by monitoring the deviation of their frequency spectrums as shown in the bottom plot.

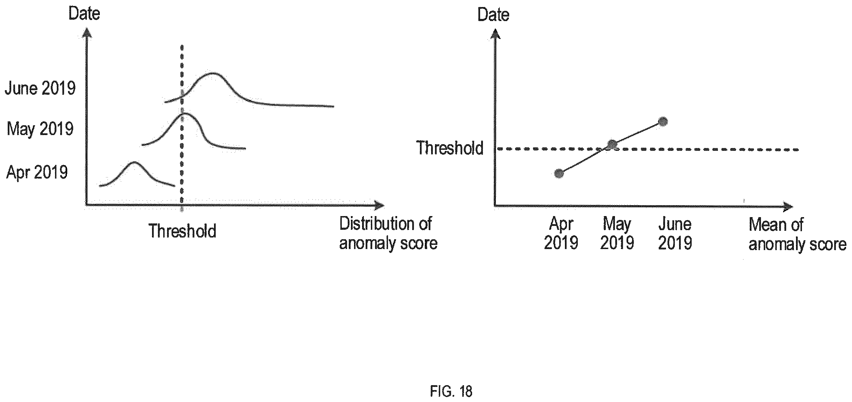

FIG. 18 illustrates an example of a visualization interface that can be provided, in accordance with an example implementation. Specifically, the left plot is the distribution of Score2 and the right plot is Batch Score. Both plots include time trends which explain degradation.

FIG. 19(a) illustrates an example physical structure of the system, in accordance with an example implementation. In a factory 1901, there are lines including one or more moving equipment, such as processing equipment 1905 and robotic arms 1904 that are configured to execute manufacturing processes such as loading components, unloading components, assembling components, and so on. For example, example manufacturing processes can involve processes in which equipment 1905 processes products 1908 and robotic arms 1904 carry products 1908 in accordance with a schedule. Multiple kinds or types of products may be processed at the same time, depending on the desired implementation. Robotic arms 1904 and equipment 1905 can be controlled by Programmable Logic Controllers (PLCs) 1909 to perform one of a plurality of tasks. Workers 1902 dispatch due date and scheduling policies to computing device 1903 which is connected to programmable logic controllers 1909, thereby communicatively coupling the computing device 1903 to the moving equipment via the corresponding PLC and any network in accordance with the desired implementation. In lines, loading products 1906 and unloading products 1907 are managed by production management systems, in accordance with an example implementation. Depending on the desired implementation, a camera system 1910 may also monitor the factory floor 1901.

In example implementations, each of the moving equipment (processing equipment 1905, robotic arms 1904) have one or more vibration sensors attached to them, which provide sensor data to the computing device 1903 via a separate network to the network connected to the PLCs, or with the same network as the PLCs depending on the desired implementation. Such vibration sensor data may be stored in the memory of the computing device 1903 as batch or streaming data, or can be stored in a database configured to be accessible by the computing device 1903. Each of the moving equipment is configured to do an activity from a plurality of preset activities based on a schedule or programming as set by the factory floor. In an example for robotic arms 1904, activities can include loading a product, unloading a product, moving the arm from one location to another location, and so on in accordance with the desired implementation. Such activities can be also be categorized under different types of jobs that is to be handled by the moving equipment (e.g., moving product X, loading/unloading product Y, etc.), so that the moving equipment is configured to handle different types of jobs for the factory.

Computing device 1903 may be configured to generate alerts and control PLCs 1909 based on the alert generated. The alert generation can incorporate the fluctuation-based anomaly detection as well as the spectrum-based anomaly detection to facilitate an alert generation and PLC control policy, in accordance with an example implementation.

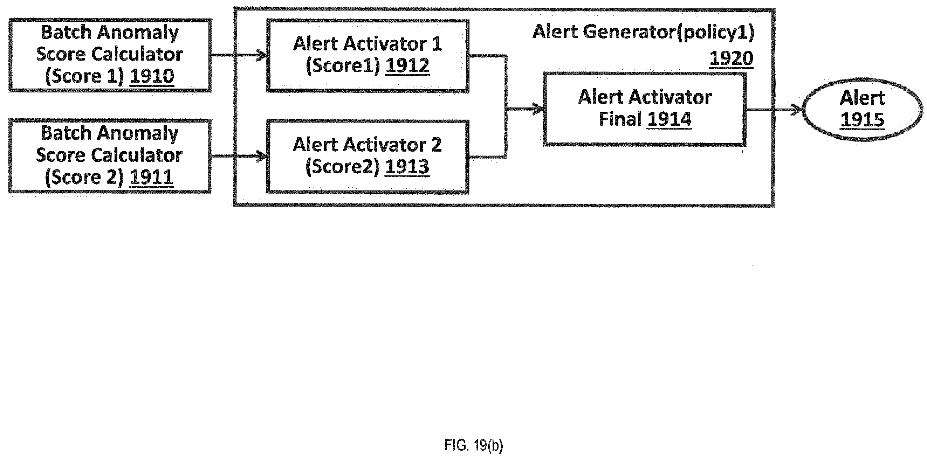

FIGS. 19(b) to 19(d) illustrate example alert generator systems for the physical structure of the system, in accordance with an example implementation. Specifically, FIG. 19(b) illustrates an example policy of an alert generator 1920. In such an example implementation, the batch anomaly score calculator 1910 for the fluctuation-based anomaly detection and the batch anomaly score calculator 1911 of the spectrum-based anomaly detection are both taken into consideration. Each type of anomaly detection is associated with a corresponding alert activator 1912 and 1913 to indicate if the batch anomaly score for the underlying anomaly detection method indicates that an alert should be activated or not in accordance with a threshold for the corresponding anomaly detection. An example function for the alert activators 1912 and 1913 can be as follows:

$$AlertActivator(x) = H_0(x - \theta) = \begin{cases} 1 & x \geq \theta \\ 0 & x < \theta \end{cases}$$

$\theta$: threshold of Activator, $x$: Score

The alert activators 1912 and 1913 for each of the anomaly detection methods can then be aggregated to a final alert activator 1914 to determine if an alert should be raised. The final alert activator 1914 determines if an alert should be raised based on the results of alert activators 1912 and 1913. The final alert activator 1914 can execute an OR operation determination or an AND operation determination depending on the desired implementation. For example, in a first type (Type1) of an OR operation determination, the determination can be:

$$AlertActivatorFinal = AlertActivator1(Score1) + AlertActivator2(Score2)$$

In another example, the AND operation determination can be:

$$AlertActivatorFinal = AlertActivator1(Score1) \times AlertActivator2(Score2)$$

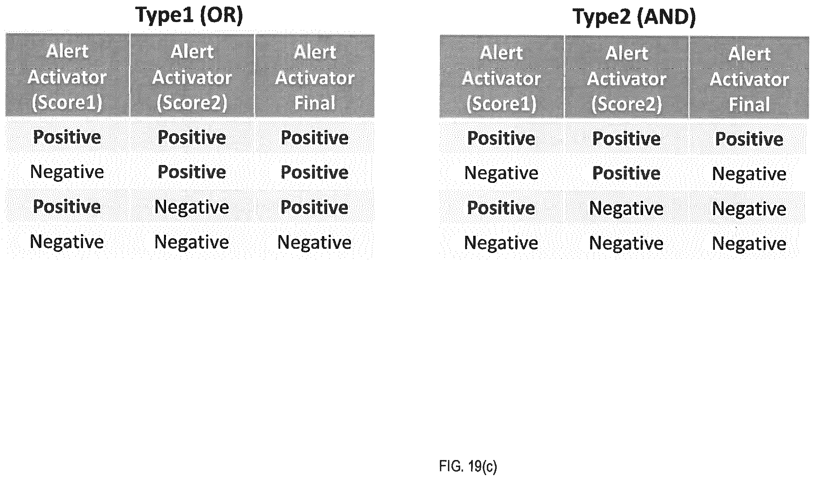

FIG. 19(c) illustrates an example decision table for the final alert activator 1914 based on each type of operation determination. Once such a determination is made, if an alert is to be issued, then alert 1915 can be raised.

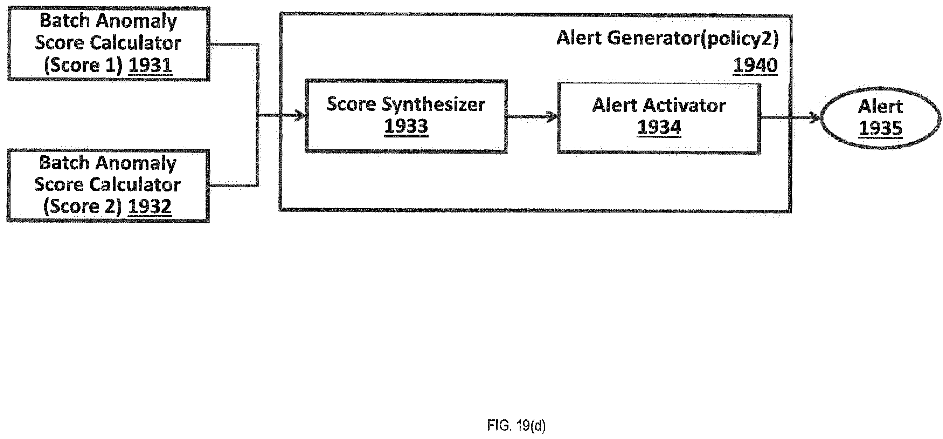

FIG. 19(d) illustrates another example of an alert generator policy 1940, in accordance with an example implementation. In this example implementation, batch anomaly score calculators 1931 and 1932 are similar to those of 1911 and 1912. In this example alert generator policy 1940, there is a score synthesizer 1933 and alert activator 1934. In this example, the score synthesizer 1933 is utilized to assign weights to each of the scores provided by the batch anomaly score calculators 1931 and 1932 to facilitate the desired implementation. In an example implementation, the score synthesizer 1933 can determine a synthesized score as follows:

$$Synthesized\ Score = W_1 \times Score1 + W_2 \times Score2$$

$W_1$, $W_2$: Weight of each score

As such, the weight of each score can be updated based on the confidence of each score, which is determined according to precision of the underlying anomaly detection method for a particular activity. If the synthesized score exceeds a threshold, then alert activator 1934 can thereby be configured to generate an alert 1935.

Depending on the desired implementation, alert 1915 and 1935 can be issued to the corresponding PLC 1909 by computer device 1903 to control the robotic arm 1904 to shut down or enter a safe mode once the alert has been generated. The PLC 1909 may also control the robotic arm 1904 to issue a warning light or make other indications to alert workers on the factory floor that an anomaly has occurred.

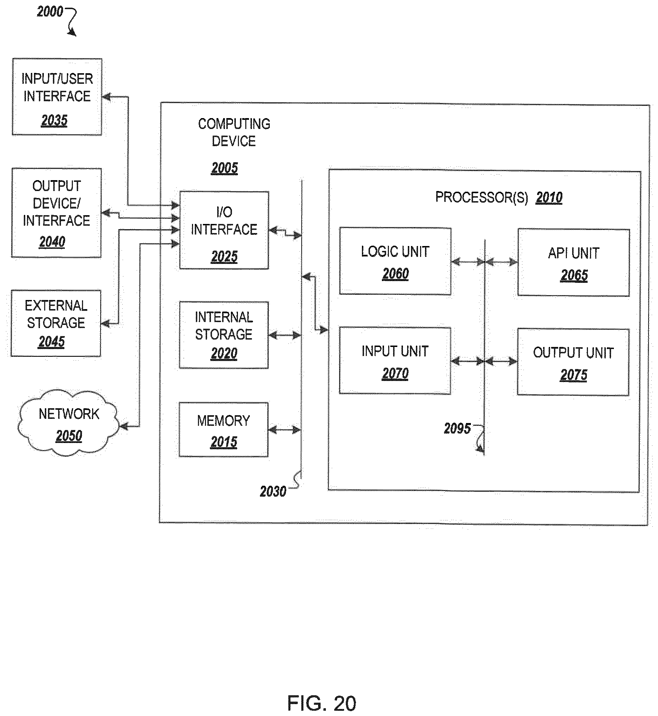

FIG. 20 illustrates an example computing environment with an example computer device suitable for use in some example implementations, such as a computing device 1903 as illustrated in FIG. 19(a). In such an example implementation, the computer device 1903 is connected to one or more programmable logic controllers (PLCs) associated with one or moving equipment on a factory floor over a network as illustrated in FIG. 19.

Computer device 2005 in computing environment 2000 can include one or more processing units, cores, or processors 2010, memory 2015 (e.g., RAM, ROM, and/or the like), internal storage 2020 (e.g., magnetic, optical, solid state storage, and/or organic), and/or I/O interface 2025, any of which can be coupled on a communication mechanism or bus 2030 for communicating information or embedded in the computer device 2005. I/O interface 2025 is also configured to receive images from cameras or provide images to projectors or displays, depending on the desired implementation.

Computer device 2005 can be communicatively coupled to input/user interface 2035 and output device/interface 2040. Either one or both of input/user interface 2035 and output device/interface 2040 can be a wired or wireless interface and can be detachable. Input/user interface 2035 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 2040 may include a display, television, monitor, printer, speaker, braille, or the like. In some example implementations, input/user interface 2035 and output device/interface 2040 can be embedded with or physically coupled to the computer device 2005. In other example implementations, other computer devices may function as or provide the functions of input/user interface 2035 and output device/interface 2040 for a computer device 2005.

Examples of computer device 2005 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 2005 can be communicatively coupled (e.g., via I/O interface 2025) to external storage 2045 and network 2050 for communicating with any number of networked components, devices, and systems, including one or more computer devices of the same or different configuration. Computer device 2005 or any connected computer device can be functioning as, providing services of, or referred to as a server, client, thin server, general machine, special-purpose machine, or another label.

I/O interface 2025 can include, but is not limited to, wired and/or wireless interfaces using any communication or I/O protocols or standards (e.g., Ethernet, 802.11x, Universal System Bus, WiMax, modem, a cellular network protocol, and the like) for communicating information to and/or from at least all the connected components, devices, and network in computing environment 2000. Network 2050 can be any network or combination of networks (e.g., the Internet, local area network, wide area network, a telephonic network, a cellular network, satellite network, and the like).

Computer device 2005 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid state media (e.g., RAM, ROM, flash memory, solid-state storage), and other non-volatile storage or memory.

Computer device 2005 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 2010 can execute under any operating system (OS) (not shown), in a native or virtual environment and can be in the form of physical hardware processors such as Central Processing Units (CPUs) or a combination of software and hardware processors. One or more applications can be deployed that include logic unit 2060, application programming interface (API) unit 2065, input unit 2070, output unit 2075, and inter-unit communication mechanism 2095 for the different units to communicate with each other, with the OS, and with other applications (not shown). The described units and elements can be varied in design, function, configuration, or implementation and are not limited to the descriptions provided.

In some example implementations, when information or an execution instruction is received by API unit 2065, it may be communicated to one or more other units (e.g., logic unit 2060, input unit 2070, output unit 2075). In some instances, logic unit 2060 may be configured to control the information flow among the units and direct the services provided by API unit 2065, input unit 2070, output unit 2075, in some example implementations described above. For example, the flow of one or more processes or implementations may be controlled by logic unit 2060 alone or in conjunction with API unit 2065. The input unit 2070 may be configured to obtain input for the calculations described in the example implementations, and the output unit 2075 may be configured to provide output based on the calculations described in example implementations.

Processor(s) 2010 can be configured to receive vibration sensor data from sensors associated with a robotic apparatus configured to perform an activity from a plurality of preset activities as illustrated in FIG. 19; cluster the vibration sensor data to determine the activity the robotic apparatus is performing as illustrated in FIGS. 2 to 4(b) and FIGS. 7 to 8, executing a first anomaly calculation process on the vibration sensor data, the first anomaly calculation process configured to calculate anomalies from the vibration sensor data for the activity that the robotic apparatus is performing, the output involving a first set of first anomaly scores corresponding to each sample set in the vibration sensor data for a preset time window as illustrated in FIGS. 5(a), 5(b), 7, 9, 15, and 16(a) and 16(b); and providing the first set of first anomaly scores to a second anomaly calculation process configured to detect anomalies across a batch of results from the first anomaly calculation process and across the plurality of activities, the second anomaly calculation process outputting a detection of anomaly or normal condition of the robotic apparatus as illustrated in FIGS, 3, 7, 10 and 15.

In an example implementation, the first anomaly calculation process can involve, for the each sample set in the vibration sensor data for the preset time window, obtaining a fluctuation component of the each sample set based on a smoothing of the each sample set according to a moving average of the each sample set; obtaining a threshold based on a corresponding cluster for each sample set determined from the clustering; and generating the first set of the first anomaly scores corresponding to each sample set in the vibration sensor data for the preset time window based on a magnitude of the fluctuation component of the each sample set exceeding the threshold as illustrated in FIG. 9.

In an example implementation, the second anomaly calculation process can involve dividing the first anomaly scores by corresponding clusters determined from the clustering; calculating a batch anomaly score for each of the corresponding clusters based on a magnitude of the first anomaly scores in each of the corresponding clusters exceeding a threshold; and detecting the anomaly or the normal condition of the robotic apparatus based on a summation of the batch anomaly score across each of the corresponding clusters as illustrated in FIG. 10.

In an example implementation, the first anomaly calculation process can include, for each sample set in the vibration sensor data for the preset time window, calculating a spectrum for each sample set based on spectrum analysis; for each of the spectrum, calculating a minimum distance of the each of the spectrum from a learned normal spectrum distribution; and generating the first set of the first anomaly scores corresponding to each sample set in the vibration sensor data for the preset time window based on an average of the minimum distance of the each of the spectrum from the learned normal spectrum pattern as illustrated in FIG. 16(b).

Processor(s) 2010 can also be configured to learn, from normal data, a set of parameters representing normal behavior of the robotic apparatus for each of the plurality of activities as illustrated in FIG. 3.

Processor(s) 2010 can also be configured to aggregate the outputting of the detection of anomaly or normal condition of the robotic apparatus with another output detection of the detection of anomaly or normal condition from a third anomaly calculation process, and generating an alert based on the aggregation as illustrated in FIGS. 19(b) to 19(d).

As described in FIG. 19(a), the activity is can be a type of job configured to be conducted by the robotic apparatus, and the robotic apparatus can be a robotic arm.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer-readable storage medium or a computer-readable signal medium. A computer-readable storage medium may involve tangible mediums such as, but not limited to optical disks, magnetic disks, read-only memories, random access memories, solid state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the teachings of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

Moreover, other implementations of the present application will be apparent to those skilled in the art from consideration of the specification and practice of the teachings of the present application. Various aspects and/or components of the described example implementations may be used singly or in any combination. It is intended that the specification and example implementations be considered as examples only, with the true scope of the present invention being indicated by the following claims.

**Claims**

1. A method, comprising:

   training a job categorizer (410) using learning data (401), comprising vibration sensor data and activity data from a plurality of preset activities of a robotic apparatus (100),
   to sort vibration sensor data (100) into different groups which are associated with the different preset activities;
   receiving vibration sensor data (101) from sensors associated with the robotic apparatus (100) configured to perform an activity from a plurality of the preset activities;
   clustering the vibration sensor data (101) to determine the activity the robotic apparatus (100) is performing;
   executing a first anomaly calculation process on the vibration sensor data (101), the first anomaly calculation process configured to calculate anomalies from the vibration sensor data (101) for the activity that the robotic apparatus (100) is performing, the output involving a first set of first anomaly scores corresponding to each sample set in the vibration sensor data (101) for a preset time window; and
   providing the first set of first anomaly scores to a second anomaly calculation process configured to detect anomalies across a batch of results from the first anomaly calculation process and across the plurality of activities, the second anomaly calculation process outputting a detection of anomaly or normal condition of the robotic apparatus (100).

2. The method of claim 1, wherein the first anomaly calculation process comprises, for the each sample set in the vibration sensor data (101) for the preset time window:

   obtaining a fluctuation component of the each sample set based on a smoothing of the each sample set according to a moving average of the each sample set;
   obtaining a threshold based on a corresponding cluster for each sample set determined from the clustering; and
   generating the first set of the first anomaly scores corresponding to each sample set in the vibration sensor data (101) for the preset time window based on a magnitude of the fluctuation component of the each sample set exceeding the threshold.

3. The method of claim 1, wherein the second anomaly calculation process comprises:

   calculating a batch anomaly score (615) for each of the corresponding clusters based on a magnitude of the first anomaly scores in each of the corresponding clusters exceeding a threshold; and
   detecting the anomaly or the normal condition of the robotic apparatus (100) based on a summation of the batch anomaly score (615) across each of the corresponding clusters.

4. The method of claim 1, wherein the first anomaly calculation process comprises, for each sample set in the vibration sensor data (101) for the preset time window:

   calculating a spectrum of the frequency for each sample set based on spectrum analysis (1202, 1402, 1602);
   for each of the spectrum, calculating a minimum distance of the each of the spectrum from a learned normal spectrum distribution; and
   generating the first set of the first anomaly scores corresponding to each sample set in the vibration sensor data (101) for the preset time window based on an average of the minimum distance of the each of the spectrum from the learned normal spectrum pattern.

5. The method of claim 1, further comprising learning, from normal data, resulting from a normal condition of the robotic apparatus (100), a set of parameters representing normal behavior of the robotic apparatus (100) for each of the plurality of activities.

6. The method of claim 1, further comprising aggregating the outputting of the detection of anomaly or normal condition of the robotic apparatus (100) with another output detection of the detection of anomaly or normal condition from a third anomaly calculation process, and generating an alert (1915, 1935) based on the aggregation.

7. The method of claim 1, wherein the activity is a type of job configured to be conducted by the robotic apparatus (100).

8. The method of claim 1, wherein the robotic apparatus (100) is a robotic arm.

9. A non-transitory computer readable medium, storing instructions for executing a process, the instructions comprising:

training a job categorizer (410) using learning data (401), comprising vibration sensor data and activity data from a plurality of preset activities of a robotic apparatus (100), to sort vibration sensor data into different groups which are associated with the different preset activities;
receiving vibration sensor data (101) from sensors associated with a robotic apparatus (100) configured to perform an activity from a plurality of preset activities;
clustering the vibration sensor data (101) to determine the activity the robotic apparatus (100) is performing;
executing a first anomaly calculation process on the vibration sensor data (101), the first anomaly calculation process configured to calculate anomalies from the vibration sensor data (101) for the activity that the robotic apparatus (100) is performing, the output involving a first set of first anomaly scores corresponding to each sample set in the vibration sensor data (101) for a preset time window; and
providing the first set of first anomaly scores to a second anomaly calculation process configured to detect anomalies across a batch of results from the first anomaly calculation process and across the plurality of activities, the second anomaly calculation process outputting a detection of anomaly or normal condition of the robotic apparatus (100).

10. The non-transitory computer readable medium of claim 9, wherein the first anomaly calculation process comprises, for the each sample set in the vibration sensor data (101) for the preset time window:

obtaining a fluctuation component of the each sample set based on a smoothing of the each sample set according to a moving average of the each sample set;
obtaining a threshold based on a corresponding cluster for each sample set determined from the clustering; and
generating the first set of the first anomaly scores corresponding to each sample set in the vibration sensor data (101) for the preset time window based on a magnitude of the fluctuation component of the each sample set exceeding the threshold.

11. The non-transitory computer readable medium of claim 9, wherein the second anomaly calculation process comprises:

calculating a batch anomaly score (615) for each of the corresponding clusters based on a magnitude of the first anomaly scores in each of the corresponding clusters exceeding a threshold; and
detecting the anomaly or the normal condition of the robotic apparatus (100) based on a summation of the batch anomaly score (615) across each of the corresponding clusters.

12. The non-transitory computer readable medium of claim 9, wherein the first anomaly calculation process comprises, for each sample set in the vibration sensor data (101) for the preset time window:

calculating a spectrum of the frequency for each sample set based on spectrum analysis (1202, 1402, 1602);
for each of the spectrum, calculating a minimum distance of the each of the spectrum from a learned normal spectrum distribution; and
generating the first set of the first anomaly scores corresponding to each sample set in the vibration sensor data (101) for the preset time window based on an average of the minimum distance of the each of the spectrum from the learned normal spectrum pattern.

13. The non-transitory computer readable medium of claim 9, further comprising learning, from normal data, resulting from a normal condition of the robotic apparatus (100), a set of parameters representing normal behavior of the robotic apparatus (100) for each of the plurality of activities.

14. The non-transitory computer readable medium of claim 9, further comprising aggregating the outputting of the detection of anomaly or normal condition of the robotic apparatus (100) with another output detection of the detection of anomaly or normal condition from a third anomaly calculation process, and generating an alert (1915, 1935) based on the aggregation.

15. The non-transitory computer readable medium of claim 9, wherein the activity is a type of job configured to be conducted by the robotic apparatus (100).

16. The non-transitory computer readable medium of claim 9, wherein the robotic apparatus (100) is a robotic arm.

17. An apparatus configured to manage a robotic apparatus (100), the apparatus comprising:
a processor (2010), configured to:

train a job categorizer (410) using learning data (401), comprising vibration sensor data and activity data from a plurality of preset activities of a robotic apparatus (100), to sort vibration sensor data into different groups which are associated with the different preset activities;
receive vibration sensor data (101) from sensors associated with the robotic apparatus (100) configured to perform an activity from a plurality of preset activities;
cluster the vibration sensor data (101) to determine the activity the robotic apparatus (100) is performing;
execute a first anomaly calculation process on the vibration sensor data (101), the first anomaly calculation process configured to calculate anomalies from the vibration sensor data (101) for the activity that the robotic apparatus (100) is performing, the output involving a first set of first anomaly scores corresponding to each sample set in the vibration sensor data (101) for a preset time window; and
provide the first set of first anomaly scores to a second anomaly calculation process configured to detect anomalies across a batch of results from the first anomaly calculation process and across the plurality of activities, the second anomaly calculation process outputting a detection of anomaly or normal condition of the robotic apparatus (100).

## Patentansprüche

1. Verfahren, das die folgenden Schritte umfasst:

Trainieren eines Aufgabenkategorisierers (410) unter Verwendung von Lerndaten (401), die Schwingungssensordaten und Aktivitätsdaten mehrerer festgelegter Aktivitäten einer Robotervorrichtung (100) umfassen, Schwingungssensordaten (100) in unterschiedliche Gruppen zu sortieren, die den unterschiedlichen festgelegten Aktivitäten zugeordnet sind;
Empfangen von Schwingungssensordaten (101) von Sensoren, die zu der Robotervorrichtung (100) gehören, die konfiguriert ist, eine Aktivität aus mehreren der festgelegten Aktivitäten auszuführen;
Clustern der Schwingungssensordaten (101), um die Aktivität zu bestimmen, die die Robotervorrichtung (100) ausführt;
Ausführen eines ersten Anomalie-Berechnungsprozesses bei den Schwingungssensordaten (101), wobei der erste Anomalie-Berechnungsprozess konfiguriert ist, Anomalien aus den Schwingungssensordaten (101) für die Aktivität zu berechnen, die die Robotervorrichtung (100) ausführt, wobei das Ergebnis eine erste Gruppe erster Anomaliewerte beinhaltet, die der jeweiligen Messwertgruppe in den Schwingungssensordaten (101) für ein festgelegtes Zeitfenster entsprechen; und
Bereitstellen der ersten Gruppe erster Anomaliewerte für einen zweiten Anomalie-Berechnungsprozess, der konfiguriert ist, Anomalien über eine Reihe von Ergebnissen aus dem ersten Anomalie-Berechnungsprozess und über die mehreren Aktivitäten zu detektieren, wobei der zweite Anomalie-Berechnungsprozess eine Detektion einer Anomalie oder eines Normalzustands der Robotervorrichtung (100) ausgibt.

2. Verfahren nach Anspruch 1, wobei der erste Anomalie-Berechnungsprozess für jede Messwertgruppe in den Schwingungssensordaten (101) für das festgelegte Zeitfenster die folgenden Schritte umfasst:

Erhalten einer Schwankungskomponente jeder Messwertgruppe auf der Basis einer Glättung der jeweiligen Messwertgruppe entsprechend einem gleitenden Mittelwert der jeweiligen Messwertgruppe;

Erhalten eines Schwellenwerts auf der Basis eines entsprechenden Clusters für jede Messwertgruppe, der aus der Clusterung bestimmt wird; und

Erzeugen der ersten Gruppe der ersten Anomaliewerte entsprechend der jeweiligen Messwertgruppe in den Schwingungssensordaten (101) für das festgelegte Zeitfenster auf der Basis einer Größe der Schwankungskomponente der jeweiligen Messwertgruppe, die den Schwellenwert überschreitet.

3. Verfahren nach Anspruch 1, wobei der zweite Anomalie-Berechnungsprozess die folgenden Schritte umfasst:

Berechnen eines Reihen-Anomaliewerts (615) für jeden der entsprechenden Cluster auf der Basis einer Größe der ersten Anomaliewerte in jedem der entsprechenden Cluster, die einen Schwellenwert überschreiten; und

Detektieren der Anomalie oder des Normalzustands der Robotervorrichtung (100) auf der Basis einer Aufsummierung der Reihen-Anomaliewerte (615) über jeden der entsprechenden Cluster.

4. Verfahren nach Anspruch 1, wobei der erste Anomalie-Berechnungsprozess für jede Messwertgruppe in den Schwingungssensordaten (101) für das festgelegte Zeitfenster die folgenden Schritte umfasst:

Berechnen eines Frequenzspektrums für jede Messwertgruppe auf der Basis einer Spektralanalyse (1202,1402,1602);

für jedes der Spektren, Berechnen eines minimalen Abstands für jedes der Spektren von einer erlernten normalen Spektralverteilung; und

Erzeugen der ersten Gruppe der ersten Anomaliewerte entsprechend der jeweiligen Messwertgruppe in den Schwingungssensordaten (101) für das festgelegte Zeitfenster auf der Basis eines Mittelwerts des minimalen Abstands des jeweiligen Spektrums von dem erlernten normalen Spektralmuster.

5. Verfahren nach Anspruch 1, das ferner das Lernen aus normalen Daten, die aus einem Normalzustand der Robotervorrichtung (100) resultieren, einer Gruppe von Parametern umfasst, die das normale Verhalten der Robotervorrichtung (100) für jede der mehreren Aktivitäten repräsentieren.

6. Verfahren nach Anspruch 1, das ferner das Zusammenführen der Ergebnisse der Detektion einer Anomalie oder eines Normalzustands der Robotervorrichtung (100) mit einer weiteren ausgegebenen Detektion bei der Detektion einer Anomalie oder eines Normalzustands aus einem dritten Anomalie-Berechnungsprozess und das Erzeugen eines Alarms (1915, 1935) auf der Basis der Zusammenführung umfasst.

7. Verfahren nach Anspruch 1, wobei die Aktivität ein Aufgabentyp ist, der so konfiguriert ist, dass er durch die Robotervorrichtung (100) ausgeführt werden kann.

8. Verfahren nach Anspruch 1, wobei die Robotervorrichtung (100) ein Roboterarm ist.

9. Nichtflüchtiges Medium, das von einem Computer gelesen werden kann, das Anweisungen zum Ausführen eines Prozesses umfasst, wobei die Anweisungen die folgenden Schritte umfassen:

Trainieren eines Aufgabenkategorisierers (410) unter Verwendung von Lerndaten (401), die Schwingungssensordaten und Aktivitätsdaten von mehreren festgelegten Aktivitäten einer Robotervorrichtung (100) umfassen, um die Schwingungssensordaten in unterschiedliche Gruppen zu sortieren, die den unterschiedlichen festgelegten Aktivitäten zugeordnet sind;

Empfangen von Schwingungssensordaten (101) von Sensoren, die zu der Robotervorrichtung (100) gehören, die konfiguriert ist, eine Aktivität aus mehreren festgelegten Aktivitäten auszuführen;

Clustern der Schwingungssensordaten (101), um die Aktivität zu bestimmen, die die Robotervorrichtung (100) ausführt;

Ausführen eines ersten Anomalie-Berechnungsprozesses bei den Schwingungssensordaten (101), wobei der erste Anomalie-Berechnungsprozess konfiguriert ist, Anomalien aus den Schwingungssensordaten (101) für die Aktivität zu berechnen, die die Robotervorrichtung (100) ausführt, wobei das Ergebnis eine erste Gruppe erster Anomaliewerte beinhaltet, die der jeweiligen Messwertgruppe in den Schwingungssensordaten (101) für ein festgelegtes Zeitfenster entsprechen; und

Bereitstellen der ersten .Gruppe erster Anomaliewerte für einen zweiten Anomalie-Berechnungsprozess, der konfiguriert ist, Anomalien über eine Reihe von Ergebnissen aus dem ersten Anomalie-Berechnungsprozess und über die mehreren Aktivitäten zu detektieren, wobei der zweite Anomalie-Berechnungsprozess eine Detektion einer Anomalie oder eines Normalzustands der Robotervorrichtung (100) ausgibt.

10. Nichtflüchtiges Medium, das von einem Computer gelesen werden kann, nach Anspruch 9, wobei der erste Anomalie-Berechnungsprozess für jede Messwertgruppe in den Schwingungssensordaten (101) für das festgelegte Zeitfenster die folgenden Schritte umfasst:

Erhalten einer Schwankungskomponente jeder Messwertgruppe auf der Basis einer Glättung der jeweiligen Messwertgruppe entsprechend einem gleitenden Mittelwert der jeweiligen Messwertgruppe;
Erhalten eines Schwellenwerts auf der Basis eines entsprechenden Clusters für jede Messwertgruppe, der aus der Clusterung bestimmt wird; und
Erzeugen der ersten Gruppe der ersten Anomaliewerte entsprechend der jeweiligen Messwertgruppe in den Schwingungssensordaten (101) für das festgelegte Zeitfenster auf der Basis einer Größe der Schwankungskomponente der jeweiligen Messwertgruppe, die den Schwellenwert überschreitet.

11. Nichtflüchtiges Medium, das von einem Computer gelesen werden kann, nach Anspruch 9, wobei der zweite Anomalie-Berechnungsprozess die folgenden Schritte umfasst:

Berechnen eines Reihen-Anomaliewerts (615) für jeden der entsprechenden Cluster auf der Basis einer Größe der ersten Anomaliewerte in jedem der entsprechenden Cluster, der einen Schwellenwert überschreitet; und
Detektieren der Anomalie oder des Normalzustands der Robotervorrichtung (100) auf der Basis einer Aufsummierung der Reihen-Anomaliewerte (615) über jeden der entsprechenden Cluster.

12. Nichtflüchtiges Medium, das von einem Computer gelesen werden kann, nach Anspruch 9, wobei der erste Anomalie-Berechnungsprozess für jede Messwertgruppe in den Schwingungssensordaten (101) für das festgelegte Zeitfenster die folgenden Schritte umfasst:

Berechnen eines Frequenzspektrums für jede Messwertgruppe auf der Basis einer Spektralanalyse (1202, 1402, 1602);
für jedes der Spektren, Berechnen eines minimalen Abstands für jedes der Spektren von einer erlernten normalen Spektralverteilung; und
Erzeugen der ersten Gruppe der ersten Anomaliewerte entsprechend der jeweiligen Messwertgruppe in den Schwingungssensordaten (101) für das festgelegte Zeitfenster auf der Basis eines Mittelwerts des minimalen Abstands des jeweiligen Spektrums von dem erlernten normalen Spektralmuster.

13. Nichtflüchtiges Medium, das von einem Computer gelesen werden kann, nach Anspruch 9, das ferner das Lernen aus normalen Daten, die aus einem Normalzustand der Robotervorrichtung (100) resultieren, einer Gruppe von Parametern umfasst, die das normale Verhalten der Robotervorrichtung (100) für jede der mehreren Aktivitäten repräsentieren.

14. Nichtflüchtiges Medium, das von einem Computer gelesen werden kann, nach Anspruch 9, das ferner das Zusammenführen der Ergebnisse der Detektion einer Anomalie oder eines Normalzustands der Robotervorrichtung (100) mit einer weiteren ausgegebenen Detektion bei der Detektion einer Anomalie oder eines Normalzustands aus einem dritten Anomalie-Berechnungsprozess und das Erzeugen eines Alarms (1915, 1935) auf der Basis der Zusammenführung umfasst.

15. Nichtflüchtiges Medium, das von einem Computer gelesen werden kann, nach Anspruch 9, wobei die Aktivität ein Aufgabentyp ist, der so konfiguriert ist, dass er durch die Robotervorrichtung (100) ausgeführt werden kann.

16. Nichtflüchtiges Medium, das von einem Computer gelesen werden kann, nach Anspruch 9, wobei die Robotervorrichtung (100) ein Roboterarm ist.

17. Vorrichtung, die konfiguriert ist, eine Robotervorrichtung (100) zu steuern, wobei die Vorrichtung Folgendes umfasst:
einen Prozessor (2010), der konfiguriert ist, die folgenden Schritte auszuführen:

Trainieren eines Aufgabenkategorisierers (410) unter Verwendung von Lerndaten (401), die Schwingungssensordaten und Aktivitätsdaten von mehreren festgelegten Aktivitäten einer Robotervorrichtung (100) umfassen, um die Schwingungssensordaten in unterschiedliche Gruppen zu sortieren, die den unterschiedlichen festgelegten Aktivitäten zugeordnet sind;

Empfangen von Schwingungssensordaten (101) von Sensoren, die zu der Robotervorrichtung (100) gehören, die konfiguriert ist, eine Aktivität aus mehreren festgelegten Aktivitäten auszuführen;

Clustern der Schwingungssensordaten (101), um die Aktivität zu bestimmen, die die Robotervorrichtung (100) ausführt;

Ausführen eines ersten Anomalie-Berechnungsprozesses bei den Schwingungssensordaten (101), wobei der erste Anomalie-Berechnungsprozess konfiguriert ist, Anomalien aus den Schwingungssensordaten (101) für die Aktivität zu berechnen, die die Robotervorrichtung (100) ausführt, wobei das Ergebnis eine erste Gruppe erster Anomaliewerte beinhaltet, die der jeweiligen Messwertgruppe in den Schwingungssensordaten (101) für ein festgelegtes Zeitfenster entsprechen; und

Bereitstellen der ersten Gruppe erster Anomaliewerte für einen zweiten Anomalie-Berechnungsprozess, der konfiguriert ist, Anomalien über eine Reihe von Ergebnissen aus dem ersten Anomalie-Berechnungsprozess und über die mehreren Aktivitäten zu detektieren, wobei der zweite Anomalie-Berechnungsprozess eine Detektion einer Anomalie oder eines Normalzustands der Robotervorrichtung (100) ausgibt.

## Revendications

1. Procédé comprenant les étapes consistant à :

entraîner un catégoriseur de tâches (410) en utilisant des données d'apprentissage (401), comprenant des données de capteur de vibrations et des données d'activité parmi une pluralité d'activités prédéfinies d'un appareil robotique (100), pour trier des données de capteur de vibrations (100) en différents groupes qui sont associés aux différentes activités prédéfinies ;

recevoir des données de capteur de vibrations (101) provenant de capteurs associés à l'appareil robotique (100) configuré pour effectuer une activité parmi une pluralité des activités prédéfinies ;

regrouper en grappes les données de capteur de vibrations (101) pour déterminer l'activité que l'appareil robotique (100) est en train d'effectuer ;

exécuter un premier processus de calcul d'anomalie sur les données de capteur de vibrations (101), le premier processus de calcul d'anomalie étant configuré pour calculer des anomalies à partir des données de capteur de vibrations (101) pour l'activité que l'appareil robotique (100) est en train d'effectuer, la sortie impliquant un premier ensemble de premiers scores d'anomalie correspondant à chaque ensemble d'échantillons dans les données de capteur de vibrations (101) pendant un laps de temps prédéfini ; et

fournir le premier ensemble de premiers scores d'anomalie vers un second processus de calcul d'anomalie configuré pour détecter des anomalies à travers un lot de résultats à partir du premier processus de calcul d'anomalie et à travers la pluralité d'activités, le second processus de calcul d'anomalie sortant une détection d'anomalie ou une condition normale de l'appareil robotique (100).

2. Procédé selon la revendication 1, dans lequel le premier processus de calcul d'anomalie comprend, pour chacun desdits ensembles d'échantillons dans les données de capteur de vibrations (101) pendant le laps de temps prédéfini, les étapes consistant à :

obtenir un composant de fluctuation de chacun desdits ensembles d'échantillons sur la base d'un lissage de chacun desdits ensembles d'échantillons en accord avec une moyenne mobile de chacun desdits ensembles d'échantillons ;

obtenir un seuil sur la base d'une grappe correspondante pour chacun desdits ensembles d'échantillons déterminés à partir du regroupement en grappes ; et

générer le premier ensemble des premiers scores d'anomalie correspondant à chacun desdits ensembles d'échantillons dans les données de capteur de vibrations (101) pendant le laps de temps prédéfini sur la base d'une amplitude du composant de fluctuation de chacun desdits ensembles d'échantillons excédant le seuil.

3. Procédé selon la revendication 1, dans lequel le second processus de calcul d'anomalie comprend les étapes consistant à :

calculer un score d'anomalie de lot (615) pour chacune des grappes correspondantes sur la base d'une amplitude des premiers scores d'anomalie dans chacune des grappes correspondantes excédant un seuil ; et

détecter l'anomalie ou la condition normale de l'appareil robotique (100) sur la base d'une somme du score d'anomalie de lot (615) à travers chacune des grappes correspondantes.

4. Procédé selon la revendication 1, dans lequel le premier processus de calcul d'anomalie comprend, pour chaque ensemble d'échantillons dans les données de capteur de vibrations (101) pendant le laps de temps prédéfini, les étapes consistant à :

calculer un spectre de la fréquence pour chaque ensemble d'échantillons sur la base d'une analyse spectrale (1202, 1402,1602) ;
pour chacun des spectres, calculer une distance minimum de chacun desdits spectres à partir d'une distribution spectrale normale apprise ; et
générer le premier ensemble des premiers scores d'anomalie correspondant à chaque ensemble d'échantillons dans les données de capteur de vibrations (101) pendant le laps de temps prédéfini sur la base d'une moyenne de la distance minimum de chacun desdits spectres à partir du motif spectral normal appris.

5. Procédé selon la revendication 1, comprenant en outre l'étape consistant à apprendre, à partir de données normales, résultant d'une condition normale de l'appareil robotique (100), un ensemble de paramètres représentant un comportement normal de l'appareil robotique (100) pour chacune de la pluralité d'activités.

6. Procédé selon la revendication 1, comprenant en outre les étapes consistant à agréger la sortie de la détection d'anomalie ou d'une condition normale de l'appareil robotique (100) avec une autre détection de sortie de la détection d'anomalie ou de la condition normale à partir d'un troisième processus de calcul d'anomalie, et à générer une alerte (1915, 1935) sur la base de l'agrégation.

7. Procédé selon la revendication 1, dans lequel l'activité est un type de tâche configurée pour être conduite par l'appareil robotique (100).

8. Procédé selon la revendication 1, dans lequel l'appareil robotique (100) est un bras robotique.

9. Support non transitoire lisible sur ordinateur, stockant des instructions destinées à exécuter un processus, les instructions comprenant :

d'entraîner un catégoriseur de tâches (410) en utilisant des données d'apprentissage (401), comprenant des données de capteur de vibrations et des données d'activité parmi une pluralité d'activités prédéfinies d'un appareil robotique (100), pour trier des données de capteur de vibrations en différents groupes qui sont associés aux différentes activités prédéfinies ;
de recevoir des données de capteur de vibrations (101) provenant de capteurs associés à l'appareil robotique (100) configuré pour effectuer une activité parmi une pluralité des activités prédéfinies ;
de regrouper en grappes les données de capteur de vibrations (101) pour déterminer l'activité que l'appareil robotique (100) est en train d'effectuer ;
d'exécuter un premier processus de calcul d'anomalie sur les données de capteur de vibrations (101), le premier processus de calcul d'anomalie étant configuré pour calculer des anomalies à partir des données de capteur de vibrations (101) pour l'activité que l'appareil robotique (100) est en train d'effectuer, la sortie impliquant un premier ensemble de premiers scores d'anomalie correspondant à chaque ensemble d'échantillons dans les données de capteur de vibrations (101) pendant un laps de temps prédéfini ; et
de fournir le premier ensemble de premiers scores d'anomalie vers un second processus de calcul d'anomalie configuré pour détecter des anomalies à travers un lot de résultats à partir du premier processus de calcul d'anomalie et à travers la pluralité d'activités, le second processus de calcul d'anomalie sortant une détection d'anomalie ou une condition normale de l'appareil robotique (100).

10. Support non transitoire lisible sur ordinateur selon la revendication 9, dans lequel le premier processus de calcul d'anomalie comprend, pour chacun desdits ensembles d'échantillons dans les données de capteur de vibrations (101) pendant le laps de temps prédéfini :

d'obtenir un composant de fluctuation de chacun desdits ensembles d'échantillons sur la base d'un lissage de chacun desdits ensembles d'échantillons en accord avec une moyenne mobile de chacun desdits ensembles d'échantillons ;
d'obtenir un seuil sur la base d'une grappe correspondante pour chacun desdits ensembles d'échantillons déterminés à partir du regroupement en grappes ; et
de générer le premier ensemble des premiers scores d'anomalie correspondant à chacun desdits ensembles d'échantillons dans les données de capteur de vibrations (101) pendant le laps de temps prédéfini sur la base d'une amplitude du composant de fluctuation de chacun desdits ensembles d'échantillons excédant le seuil.

11. Support non transitoire lisible sur ordinateur selon la revendication 9, dans lequel le second processus de calcul d'anomalie comprend :

de calculer un score d'anomalie de lot (615) pour chacune des grappes correspondantes sur la base d'une amplitude des premiers scores d'anomalie dans chacune des grappes correspondantes excédant un seuil ; et de détecter l'anomalie ou la condition normale de l'appareil robotique (100) sur la base d'une somme du score d'anomalie de lot (615) à travers chacune des grappes correspondantes.

12. Support non transitoire lisible sur ordinateur selon la revendication 9, dans lequel le premier processus de calcul d'anomalie comprend, pour chaque ensemble d'échantillons dans les données de capteur de vibrations (101) pendant le laps de temps prédéfini :

de calculer un spectre de la fréquence pour chaque ensemble d'échantillons sur la base d'une analyse spectrale (1202, 1402, 1602) ;
pour chacun des spectres, de calculer une distance minimum de chacun desdits spectres à partir d'une distribution spectrale normale apprise ; et
de générer le premier ensemble des premiers scores d'anomalie correspondant à chaque ensemble d'échantillons dans les données de capteur de vibrations (101) pendant le laps de temps prédéfini sur la base d'une moyenne de la distance minimum de chacun desdits spectres à partir du motif spectral normal appris.

13. Support non transitoire lisible sur ordinateur selon la revendication 9, comprenant en outre un apprentissage, à partir de données normales, résultant d'une condition normale de l'appareil robotique (100), d'un ensemble de paramètres présentant un comportement normal de l'appareil robotique (100) pour chacune de la pluralité d'activités.

14. Support non transitoire lisible sur ordinateur selon la revendication 9, comprenant en outre une agrégation de la sortie de la détection d'anomalie ou d'une condition normale de l'appareil robotique (100) avec une autre détection de sortie de la détection d'anomalie ou de la condition normale à partir d'un troisième processus de calcul d'anomalie, et une génération d'une alerte (1915, 1935) sur la base de l'agrégation.

15. Support non transitoire lisible sur ordinateur selon la revendication 9, dans lequel l'activité est un type de tâche configurée pour être conduite par l'appareil robotique (100).

16. Support non transitoire lisible sur ordinateur selon la revendication 9, dans lequel l'appareil robotique (100) est un bras robotique.

17. Appareil configuré pour gérer un appareil robotique (100), l'appareil comprenant :
un processeur (2010), configuré pour :

entraîner un catégoriseur de tâches (410) en utilisant des données d'apprentissage (401), comprenant des données de capteur de vibrations et des données d'activité parmi une pluralité d'activités prédéfinies d'un appareil robotique (100), pour trier des données de capteur de vibrations en différents groupes qui sont associés aux différentes activités prédéfinies ;
recevoir des données de capteur de vibrations (101) provenant de capteurs associés à l'appareil robotique (100) configuré pour effectuer une activité parmi une pluralité des activités prédéfinies ;
regrouper en grappes les données de capteur de vibrations (101) pour déterminer l'activité que l'appareil robotique (100) est en train d'effectuer ;
exécuter un premier processus de calcul d'anomalie sur les données de capteur de vibrations (101), le premier processus de calcul d'anomalie étant configuré pour calculer des anomalies à partir des données de capteur de vibrations (101) pour l'activité que l'appareil robotique (100) est en train d'effectuer, la sortie impliquant un premier ensemble de premiers scores d'anomalie correspondant à chaque ensemble d'échantillons dans les données de capteur de vibrations (101) pendant un laps de temps prédéfini ; et
fournir le premier ensemble de premiers scores d'anomalie vers un second processus de calcul d'anomalie configuré pour détecter des anomalies à travers un lot de résultats à partir du premier processus de calcul d'anomalie et à travers la pluralité d'activités, le second processus de calcul d'anomalie sortant une détection d'anomalie ou une condition normale de l'appareil robotique (100).

FIG. 1

FIG. 2

**Job Categorizer 300**

Learning data → Vibration sample $V^j$ → Trajectory Extractor → Down Sampling → Clustering ⤏ Clustering model

**Anomaly Score Calculator 301**

Fluctuation Extractor

$a^i, i = 1, \dots, K$ ⟵ Thresholds Calculator 1

Deviation Calculator → **Score** for current vibration sample $V^j$

**Batch of scores** for a batch of vibration data

**Batch Anomaly Score Calculator 302**

Thresholds Calculator 2 | Batch Anomaly Score Calculator ⤏ $\beta^k, k = 1, \dots, K$

FIG. 3

EP 3 796 115 B1

Job Categorizer 410

Learning data (Normal) 401 → Trajectory Extractor 411 → Down Sampling 412 → Clustering 413 ┈┈> Clustering model 414

FIG. 4(a)

Input 401

Execute for each sample 421

Execute trajectory sampler 422

Execute downsampling 423

Samples remaining? 424

Yes

No

Execute clustering 425

Clustering model 414

FIG. 4(b)

**Anomaly Score Calculator 500**

Cluster IDs
Raw Vibrations
Smooth Vibrations

Fluctuation Extractor 501

Thresholds Calculator 1 502

$a^k, k = 1, ..., K$

Deviation Calculator 503

**Scores**

$$S = [s_1, ..., s_N]$$

FIG. 5(a)

28

EP 3 796 115 B1

Input 510

Execute fluctuation extractor for each vibration
sample 511

Execute thresholds calculator for each cluster
of vibrations 512

Execute deviation calculator for the fluctuation
of each vibration sample based on cluster ID
513

Anomaly
scores 514

FIG. 5(b)

**For N vibration data in learning**

- Cluster ids: $C = [c^1, ..., c^i, ..., c^N]$
- Scores: $S = [s_1 ..., s_N]$

**Batch Anomaly Score Calculator 600**

| Batch Anomaly Score Calculation 601 | → | Thresholds Calculator 2 602 |

$\beta = [\beta^1, ... \beta^k, ..., \beta^k]$

FIG. 6(a)

EP 3 796 115 B1

FIG. 6(b)

FIG. 7

FIG. 8

FIG. 9

- Cluster ids: $C = [c^t, \ldots, c^{t+i}, \ldots, c^{t+T-1}$
- Scores: $S = [s^t \ldots, s^{t+i}, \ldots s^{t+T-1}$

Batch Anomaly Score Calculator 1000

$$\beta^k, k = 1, \ldots, K$$

Batch score

FIG. 10

FIG. 11

FIG. 12

1D Vibration sample

$$V = [v_1, \ldots, v_n]$$

Spectrum
Analysis <u>1202</u>

A series of frequency spectrums

$$S = [S^1, S^2, \ldots, S^m]$$

FIG. 13

Vibration sample
$V^j, j = 1, ..., N$

Learning Model 1400

Learning data 1401

Spectrum analysis 1402

Incremental Clustering 1410

Distance Calculator 1403

Updater 1404

Spectrum Template set 1420

FIG. 14(a)

Input 1430

Calculate and cluster spectrums 1431

Calculate threshold and centroid for each cluster 1432

For each vibration data in the learning data 1433

Calculate spectrum for each vibration data 1434

For each extracted spectrum 1435

Calculate minimum distance from learned normal spectrum pattern 1436

Add spectrum to cluster if distance is greater than threshold 1437

Calculate centroid for each cluster and update threshold 1438

Spectrum template set 1439

FIG. 14(b)

FIG. 15

Vibration sample
$V^j, j = 1, ..., N$

Application Data 1601

**Anomaly Score Calculator 1600**

Spectrum analysis 1602

Distance Calculator 1603

Spectrum Template set 1604

Score2

FIG. 16(a)

Input <u>1610</u>

For each remaining vibration data in the application data <u>1611</u>

Calculate the spectrum for each vibration data <u>1612</u>

For each spectrum extracted from each vibration data, calculate minimum distance from learned normal spectrum pattern <u>1613</u>

Anomaly scores <u>1614</u>

FIG. 16(b)

FIG. 17(a)

FIG. 17(b)

FIG. 18

EP 3 796 115 B1

FIG. 19(a)

FIG. 19(b)

EP 3 796 115 B1

## Type1 (OR)

| Alert Activator (Score1) | Alert Activator (Score2) | Alert Activator Final |
|---|---|---|
| Positive | Positive | Positive |
| Negative | Positive | Positive |
| Positive | Negative | Positive |
| Negative | Negative | Negative |

## Type2 (AND)

| Alert Activator (Score1) | Alert Activator (Score2) | Alert Activator Final |
|---|---|---|
| Positive | Positive | Positive |
| Negative | Positive | Negative |
| Positive | Negative | Negative |
| Negative | Negative | Negative |

FIG. 19(c)

FIG. 19(d)

2000

INPUT/USER
INTERFACE
2035

OUTPUT
DEVICE/
INTERFACE
2040

EXTERNAL
STORAGE
2045

NETWORK
2050

COMPUTING
DEVICE
2005

I/O
INTERFACE
2025

INTERNAL
STORAGE
2020

MEMORY
2015

2030

PROCESSOR(S) 2010

LOGIC UNIT
2060

API UNIT
2065

INPUT UNIT
2070

OUTPUT UNIT
2075

2095

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019067128 A1
- US 2012041575 A1
- US 5251151 A